# FASCICULE DE BREVET EUROPEEN

(11) **EP 4 015 699 B1**
(45) Date de publication et mention de la délivrance du brevet: **12.07.2023**
(21) Numéro de dépôt: 21212990.2
(22) Date de dépôt: 07.12.2021
(51) Int. Cl.: D06F 39/10, B01D 33/00, B01D 29/11, B01D 29/58, B01D 35/147, D06F 34/14, D06F 34/20, D06F 103/42, D06F 105/58

(54) **FILTRE DE MACHINE À LAVER POURVU D'UN CLAPET DE DÉRIVATION ET UTILISATION D'UN ÉLÉMENT FILTRANT AVEC CE CLAPET**
WASCHMASCHINENFILTER MIT EINEM ABLEITUNGSVENTIL UND VERWENDUNG EINES FILTERELEMENTS MIT DIESEM VENTIL
FILTER FOR WASHING MACHINE PROVIDED WITH A BYPASS VALVE AND USE OF A FILTERING ELEMENT WITH SAID VALVE

(30) Priorité: 15.12.2020 FR 2013246
(43) Date de publication de la demande: 22.06.2022
(73) Titulaire: SOGEFI FILTRATION, 78280 Guyancourt (FR)
(72) Inventeur: SANET, Fabien, 78990 Elancourt (FR)
(74) Mandataire: Plasseraud IP

(56) Documents cités:
- CN-U- 210 238 083

## Description

### Domaine technique

La présente divulgation relève du domaine de la filtration de particules contenues dans des eaux utilisées par une machine à laver le linge, en vue de permettre d'évacuer des eaux épurées. L'invention concerne plus particulièrement un filtre présentant un élément filtrant à un ou plusieurs médias de filtration, ainsi que son utilisation dans un circuit d'évacuation d'un lave-linge.

Il est souligné que, dans la présente demande, l'expression "machine à laver" peut aussi bien désigner une "simple" machine à laver (c'est-à-dire une machine à laver qui ne peut que laver et rincer le linge) ou une machine à laver-sécher (c'est-à-dire une machine à laver qui peut également sécher le linge).

### Arrière-plan technologique

L'eau consommée par les machines à laver dans une cuve de lavage (contenant typiquement un tambour perforé rotatif pour le chargement du linge) circule par un circuit d'arrivée d'eau permettant le mélange, typiquement avec des produits de lavage et de rinçage, avant d'atteindre la cuve. Il est également prévu un circuit de sortie d'eau, comprenant généralement une pompe de vidange et quelques tuyaux de vidange, adapté pour évacuer les eaux usées, en particulier après les phases de lavage et de rinçage.

Le circuit de sortie de l'eau comprend généralement un dispositif de séparation, placé par exemple entre le fond de la cuve et la pompe de vidange, adapté pour retenir tous les corps indésirables, tels que des boutons détachés du linge, pièces de monnaie introduites par erreur dans la machine à laver qui sont passés par les trous situés sur la périphérie du tambour, ou qui sont tombés au fond de la cuve en passant entre le tambour et la cuve, ce qui pourrait endommager ou obstruer la pompe de vidange.

Ces dispositifs de séparation laissent passer les petites particules, comme les microplastiques, microfibres et particules millimétriques ou submillimétriques du même genre. Il s'agit au mieux d'une filtration grossière, ce qui a pour avantage d'éviter des colmatages trop fréquents pour ce type de dispositif. Cependant, les rejets de machine à laver peuvent alors être néfastes pour l'environnement. Dans la présente demande, on appelle « microplastiques » des morceaux/éléments mesurant moins de 5 millimètres (taille caractéristique), ce qui peut inclure des particules très peu épaisses (de l'ordre de l'épaisseur d'un cheveu).

On connaît, par le document WO2019017850 (ou son équivalent US 2020179846), un dispositif de filtration visant à séparer certains microplastiques et susceptible d'équiper des machines à laver existantes. Ce document prévoit, afin de retarder le colmatage, un média flottant dans la chambre de filtration. L'assemblage de ce type de filtre est rendu compliqué par la mise en place du média flottant, qui n'a pas de conformation bien définie. En pratique, la fréquence de colmatage reste élevée avec un tel dispositif de filtration et le colmatage peut se déclarer subitement, laissant l'utilisateur dans une situation inconfortable d'arrêt de la machine à laver.

Le document CN210238083 U, qui prévoit de filtrer et séparer les microplastiques dans la canalisation de sortie d'une machine à laver, présente le même genre d'inconvénient.

### Résumé

La présente divulgation vient améliorer la situation.

Il est proposé un filtre de machine à laver, en particulier de machine à laver le linge, destiné à être installé dans une sortie d'un circuit de circulation d'eau liquide afin de purifier les eaux usées sortant de la machine et/ou à réintroduire dans ledit circuit, le filtre comprenant :
- un élément filtrant pour filtrer un flux d'eau chargé en particules solides en suspension dont des particules de taille inférieure à 1 mm,
- un élément de paroi de délimitation de tout ou partie de la chambre de filtration, présentant une sortie d'évacuation d'eau filtrée communiquant avec une zone en aval de la filtration située dans la chambre de filtration,
sachant que la zone en aval est séparée d'une zone en amont de la filtration (filtration par l'élément filtrant) par une partie de l'élément filtrant perméable à l'eau qui présente au moins un média filtrant et par une structure de support pour supporter tout ou partie dudit média filtrant, le filtre présentant en outre au moins un clapet, mobile entre une position par défaut et une position décalée, chaque clapet dans sa position par défaut obturant l'accès à au moins une ouverture dite de dérivation pour faire communiquer la zone d'amont et la zone d'aval au travers de la structure de support.

Grâce à cet agencement, on obtient un compromis avantageux combinant la filtration de particules de faible taille (millimétriques même un peu plus petites) pour évacuer des eaux plus propres, tout en permettant, en cas de colmatage d'un média filtrant en particulier, d'éviter un blocage de la circulation du flux d'eau. Concrètement, le filtre constitue un dispositif de séparation sélectif et qui peut présenter des intervalles de maintenance plus longs.

L'accès à une ou plusieurs ouvertures de dérivation est sélectivement contrôlé par une partie mobile du clapet (partie mobile sous l'effet de la surpression régnant dans les conduits traversants débouchant par ces ouvertures et dans la zone d'amont), ce qui permet de constituer, au travers de la structure de support, une voie de communication auxiliaire.

Un tel agencement peut inclure au moins deux couches de filtration, et permettre d'étager la filtration pour séparer des particules de taille supérieure ou égale à 5 mm (ou de taille millimétrique) dans un premier étage, tandis que la séparation de plus petites particules (par exemple de 1 mm environ ou submillimétriques) est réalisée dans un autre étage. Contrairement à des solutions avec membrane très sélective, la présente solution peut permettre alors de tirer parti de plusieurs couches de filtration, tout en disposant d'une dérivation permise dans la position d'ouverture du ou des clapets.

Typiquement, l'élément filtrant est adapté pour séparer au moins une première fraction de ces particules solides du côté d'une zone en amont de la filtration (zone en amont délimitée par l'élément filtrant et située dans une chambre de filtration). Chaque clapet est configuré de façon à occuper sa position décalée pour permettre une circulation d'eau vers la zone en aval via l'ouverture de dérivation, lorsqu'un état de colmatage de la partie perméable à l'eau engendre une surpression dans la zone en amont et/ou cet état de colmatage a été détecté par un moyen sensible à un paramètre physique représentatif du colmatage de cette partie perméable.

L'élément filtrant présente une toile ou membrane de filtration configurée pour séparer de l'eau des microfibres issues de matériaux textiles. La toile ou membrane forme une couche de filtration en aval d'une première couche de filtration qui peut réaliser une filtration plus grossière.

Selon une particularité, l'élément filtrant est pourvu d'une couche ou toile en textile non tissé, par exemple pour former un moyen de séparation de microplastiques ou microfibres, dont des particules d'une taille caractéristique égale à environ 1 mm ou moins.

La présence d'un clapet de décharge permet à l'eau d'être tout de même évacuée malgré le possible colmatage d'une couche de filtration dans la partie perméable de l'élément filtrant. Avantageusement, un clapet de décharge peut être fonctionnellement associé à une couche de média filtrant qui est généralement la plus rapide à colmater, cette couche étant par exemple la première couche de filtration (formant un formant un média filtrant) disposée dans la chambre de filtration, suivant le sens de circulation du flux d'eau à épurer. Eventuellement, un clapet (additionnel ou alternatif) peut être fonctionnellement associé à une deuxième couche de filtration

Selon une particularité, le filtre comprend deux clapets dont l'un est associé à une première couche de filtration pour laquelle il permet une dérivation en cas de colmatage, et l'autre est associé à une deuxième couche de filtration pour laquelle il permet une dérivation en cas de colmatage. La deuxième couche de filtration est optionnellement une toile ou membrane de séparation de particules ou microfibres de petite taille non séparées par la première couche de filtration.

Dans des modes de réalisation préférés, chaque clapet est intégré entièrement à l'intérieur du boîtier. Ceci permet avantageusement de fournir, pour des machines à laver déjà existantes/non équipées de filtres performants, un filtre du type susmentionné qui est relativement compact et peut se connecter de façon simple sur le circuit d'évacuation d'eau, en intégrant la fonction de décharge en cas de colmatage dans la chambre de filtration.

De préférence, seul l'élément filtrant se change après constatation d'un colmatage d'une couche ou de plusieurs couches de filtration, une telle constatation pouvant être faire par une alerte fournie par un système d'avertissement, intégré (au moins pour partie) ou non au filtre.

Selon une particularité, la structure de support peut présenter un joint annulaire ou un bord/lèvre d'étanchéité venant en contact d'étanchéité annulaire contre l'élément de paroi. Le ou les clapets présentent une partie d'obturation qui est située dans une zone d'aval ou un espace intercalaire situé au-delà du contact d'étanchéité dans le sens de circulation du flux d'eau dans la chambre de filtration.

L'élément filtrant présente une face externe annulaire disposant d'un média/couche utilisée pour la filtration. Une telle couche de filtration peut être tubulaire, au moins en partie. Cette géométrie facilite le montage de l'élément filtrant dans la chambre de filtration et la surface de révolution peut être plus importante. La structure de support, qui fait partie de l'élément filtrant, peut inclure un tube central pour permettre de conformer au moins un média filtrant (couche filtrante) de façon annulaire.

Selon une particularité, la structure se décompose en au moins deux pièces séparées. Typiquement, ces deux pièces sont réparties dans deux sous-éléments dont un premier sous-élément permet de porter/supporter une couche de filtration espacée radialement d'une autre couche de filtration portée/supportée par le deuxième sous-élément.

Typiquement, chaque sous-élément comprend une paire de flasques prévues à des extrémités axiales opposées et une partie tubulaire s'étendant de l'un à l'autre des flasques de la paire.

Selon une particularité, la partie d'obturation du clapet est mobile par poussée en direction de la zone d'aval, la partie d'obturation recouvrant une ou plusieurs ouvertures qui traversent un sous-élément de la structure dans le sens de l'épaisseur, la partie d'obturation s'étendant, en relation à cette ouverture, du côté opposé à la zone d'amont. La partie d'obturation peut s'étendre transversalement à l'axe d'écoulement défini par chaque ouverture de dérivation recouverte par la partie d'obturation.

Le boîtier peut présenter :
- une entrée pour l'amenée du flux d'eau à épurer, communiquant avec la zone en amont ;
- une sortie pour l'eau filtrée, communiquant avec la zone en aval ;
- un premier élément de boîtier incluant l'entrée ou la sortie ; et
- un deuxième élément de boîtier, par exemple un couvercle à partie préhensible ondulée ou nervurée, se fixant de façon amovible sur le premier élément de boîtier.

Dans une première option, tout ou partie de l'au moins un média filtrant présente une forme annulaire, de façon à présenter une face interne qui délimite un espace intérieur creux de la zone en amont. Ainsi la filtration peut être centrifuge et réalisée par un élément filtrant compact et simple à monter dans le boîtier. Dans une deuxième option, tout ou partie de l'au moins un média filtrant présente une forme annulaire, de façon à présenter une face interne qui délimite un espace intérieur creux de la zone en aval. Dans ce cas, la filtration peut être centripète avec une bonne compacité. L'espace intérieur creux pout éventuellement directement mener vers une sortie prévue axialement en regard de cet espace intérieur creux.

Les caractéristiques exposées dans les paragraphes suivants peuvent, optionnellement, être mises en oeuvre, indépendamment les unes des autres ou en combinaison les unes avec les autres :
- l'élément de paroi est une partie de canalisation qui inclut l'entrée du filtre et la sortie du filtre.
- l'élément de paroi présente une partie tubulaire et le filtre constitue un filtre en ligne.
- l'entrée et la sortie sont disposée à deux extrémités opposées du boîtier.
- l'élément de paroi forme un boîtier pourvu d'une ouverture d'accès à l'élément filtrant, obturé de façon amovible par un couvercle.
- l'élément filtrant s'étend de façon annulaire entre un premier flasque et un deuxième flasque.
- un tube qui s'étend entre le premier flasque et le deuxième flasque forme un siège pour un clapet à partie mobile permettant de contourner une couche de filtration se trouvant dans un état colmaté.
- l'un au moins parmi le premier flasque et le deuxième flasque forme un siège pour un clapet à partie mobile permettant, dans un état décalé pour libérer une ouverture de dérivation, de contourner une couche de filtration se trouvant dans un état colmaté.
- il est prévu deux clapets dont l'un est associé à une première couche de filtration pour laquelle il permet une dérivation en cas de colmatage et l'autre est associé à une deuxième couche de filtration pour laquelle il permet une dérivation en cas de colmatage.
- la deuxième couche de filtration consiste en une toile ou membrane de séparation de particules de taille inférieure à 1 mm ou microfibres, non séparées par la première couche de filtration.
- l'élément filtrant est rendu solidaire d'un couvercle par des moyens de fixation, qui sont par exemple portés par un flasque de l'élément filtrant.
- un clapet est monté pour se déplacer linéairement, en étant guidé par une ou deux tiges ; la partie mobile d'obturation du clapet peut être intégralement formée avec une tige (ou plusieurs tiges).
- plusieurs couches de filtration sont montées dans l'élément filtrant.
- au moins deux sous-éléments à partie tubulaire (partie sur laquelle est montée au moins une couche de filtration) font partie de l'élément filtrant.
- le nombre de clapets prévus dans l'élément filtrant est supérieur à N, où N est un nombre entier représentant le nombre de couches de filtration.
- la relation suivante est vérifiée : N ≥ 2 n, où n est le nombre de sous-éléments à partie tubulaire sur laquelle est montée au moins une couche de filtration.
- au moins un clapet est prévu pour décharger un flux d'eau sans traverser la première couche.
- au moins un clapet est prévu pour décharger un flux d'eau sans traverser une deuxième couche de filtration, ce clapet étant apte à permettre une dérivation en l'absence de colmatage d'une première couche de filtration située en amont de la deuxième couche.
- au moins un clapet est prévu pour décharger un flux d'eau sans traverser un nombre déterminé de couches de filtration, de préférence en déversant ce flux directement en aval d'une couche de filtration délimitant la zone d'aval où l'eau circule pour rejoindre directement la sortie sans filtration complémentaire par un média filtrant.
- un seul clapet est prévu dans l'élément filtrant.
- un clapet de l'élément filtrant est guidé par deux tiges parallèles et présente une partie d'obturation qui s'étend perpendiculairement à ces deux tiges (cette disposition peut permettre de réalisation une ouverture assez large, de grande section, avec un guidage efficace du clapet).
- au moins deux clapets sont montés en parallèles, de préférence sur une même paroi dans la structure de support, en siégeant sur une même portion de la structure de support, par exemple en étant interposés entre la face côté amont de l'élément filtrant et l'entrée.
- un clapet ou tout ou partie des clapets présente une partie d'obturation qui inclut une ouverture de section plus petite que la section de l'au moins une ouverture de dérivation recouverte par cette partie d'obturation, l'ouverture de section plus petite étant optionnellement dimensionnée, maillée ou garnie d'un média filtrant pour empêcher le passage de particules solides dont la taille maximale n'excède pas un seuil prédéterminé, par exemple de 1 mm.

Selon une particularité, le colmatage d'une couche de filtration appartenant à l'élément filtrant est détecté, par utilisation d'un élément indicateur de colmatage. La détection peut déclencher l'émission d'un signal lumineux et/ou d'un signal sonore.

Optionnellement, le ou les clapets sont configurés pour déclencher, dans la position décalée de libération de la ou les ouverture(s) de dérivation associée(s), un système d'avertissement, afin d'alerter du colmatage affectant la partie perméable à l'eau de l'élément filtrant.

Dans certaines réalisations, le filtre est pourvu d'un dispositif sensible à un paramètre physique représentatif du colmatage de ladite partie perméable à l'eau, ce dispositif comprenant :
- un capteur en liaison avec un système d'avertissement, afin d'alerter du colmatage affectant la partie perméable à l'eau de l'élément filtrant,
- et/ou une partie visible d'affichage, mobile pour visuellement représenter le colmatage.

L'utilisation d'un dispositif sensible à un paramètre représentatif de colmatage, par exemple sous la forme d'un capteur, permet de monter un capteur qui n'est pas forcément localisé près du clapet ni même forcément dans la chambre de filtration. En effet, dans certaines options, le colmatage peut être détecté par une perte de charge liée au filtre qui dépasse un certain seuil (ce seuil pouvant éventuellement être choisi pour précéder un colmatage total conduisant à l'absence de tout écoulement de liquide au travers du filtre).

Un système d'avertissement (lumineux, via une application d'un téléphone intelligent/pourvu d'un système d'exploitation prenant en charge des applications ou autre appareil de micro-informatique) peut être déclenché lorsque ce clapet de décharge est ouvert, indiquant à l'utilisateur de procéder au changement du filtre ou de l'élément filtrant.

Dans des formes de réalisation de l'élément filtrant, on peut avoir recours à une ou plusieurs des particularités suivantes :
- l'élément filtrant est sous la forme d'un insert incluant la structure de support et monté de manière amovible dans la chambre de filtration, l'au moins un clapet faisant partie de l'élément filtrant.
- l'élément filtrant présente un flasque de forme annulaire et une couche en matériau de filtration attachée à la structure de support, cette couche faisant partie de l'au moins un média filtrant, l'au moins un clapet incluant un clapet de dérivation dont une partie mobile obture au moins une ouverture formée dans le flasque, dans un tube intérieur fixé sur le flasque, ou dans une extension du flasque située à l'opposé de ladite couche filtrante.
- l'au moins une ouverture communique avec un espace en aval de la couche en matériau de filtration, cet espace en aval s'étendant à l'intérieur de la chambre de filtration.

- le flasque a une forme annulaire, de préférence cylindrique, supportant la couche qui a une conformation annulaire.
- l'élément filtrant peut présenter un flasque additionnel situé à l'opposé du flasque, les flasques pouvant s'étendre parallèlement l'un à l'autre.
- deux couches de filtration successives de l'élément filtrant (formant deux médias filtrants distincts) sont séparées entre elles par un espace intercalaire qui est de préférence annulaire.
- l'élément filtrant inclut une ouverture de dérivation permettant de faire communiquer l'espace intercalaire avec la zone en aval de l'élément filtrant qui communique avec la sortie.

Dans certaines réalisations, le filtre comprend : une première voie de dérivation ouverte/accessible à l'aide d'un premier clapet, permettant de contourner un premier média filtrant incluant une première couche de filtration de l'élément filtrant, qui présente une première taille de pores ; et un deuxième média filtrant incluant une deuxième couche de filtration, ayant une deuxième taille de pores qui est de préférence supérieure à la première taille de pores, le deuxième média filtrant étant positionné sur la première voie de dérivation.

Dans certaines options, l'élément filtrant dispose de deux voies de dérivation agencées en série, de façon qu'un clapet de décharge soit ouvert en cas de colmatage du deuxième média filtrant, placé sur la première voie de dérivation. Il est ainsi créé une deuxième voie de dérivation à la suite de la première voie de dérivation.

Selon un autre aspect, il est proposé une machine à laver le linge, comprenant :
- une cuve de lavage ;
- un circuit de vidange pour l'évacuation d'eau sortant de la cuve de lavage ;
- une terminal de communication disposant d'une sortie d'affichage et/ou d'une sortie sonore ; et
- le filtre selon l'invention, placé dans le circuit de vidange, de préférence en aval d'un préfiltre,
le terminal de communication étant configuré pour afficher un message et/ou produire un signal sonore et/ou lumineux, afin d'avertir d'un besoin de maintenance du filtre, en fonction d'un paramètre représentatif de l'un au moins parmi une durée d'utilisation de l'élément filtrant et une ouverture d'un clapet de l'élément filtrant.

Avec ces dispositions, la machine/lave-linge peut évacuer de l'eau propre pendant la durée de vie de l'élément filtrant qui correspond à la durée pour laquelle l'élément filtrant reste capable de séparer des particules relativement petites, typiquement des microplastiques et/ou des microfibres. Il est permis de détecter la dégradation de filtration à un stade qui peut précéder le colmatage complet sans la moindre circulation dans le circuit de vidange.

L'effet de décharge permet, le cas échéant, de faire fonctionner convenablement la machine pour une période de transition courte (quelques cycles de lavage supplémentaires, par exemple une dizaine), qui peut correspondre au temps nécessaire pour se procurer un filtre ou un élément filtrant de rechange. Une filtration peut encore est réalisée par une couche de filtration complémentaire de celle colmatée.

Dans certaines réalisations, le paramètre de durée d'utilisation peut être choisi parmi :
- une durée, par exemple prédéfinie et optionnellement comptée en jours, depuis l'installation ou la première utilisation de l'élément filtrant ;
- un paramètre combinant une durée prédéterminée et un paramètre représentatif de la fréquence d'utilisation de la machine à laver avec le filtre.

Selon une particularité, une alarme sonore ou lumineuse peut être prévue pour l'avertissement de l'expiration de la durée de vie de l'élément filtrant. Le filtre peut intégrer le composant ou au moins une partie du système permettant cet avertissement.

Dans certains modes de réalisation, il est prévu un compteur de jours ou un compteur de démarrages de programmes de lavage, afin de prendre en compte la durée d'utilisation de l'élément filtrant.

Selon un autre aspect, il est proposé une utilisation du filtre selon l'invention pour équiper un lave-linge, éventuellement en modifiant uniquement une région de connexion du circuit de vidange, en amont et/ou en aval d'une pompe.

Selon cette utilisation, le filtre est monté dans un circuit de vidange d'un lave-linge, le filtre étant pourvu d'un dispositif sensible à un paramètre physique représentatif du colmatage de la partie perméable à l'eau de l'élément filtrant et/ou d'un déplacement d'un clapet pour libérer une ouverture de dérivation, un signal d'avertissement étant transmis à une interface de communication, en fonction d'un état de détection dudit dispositif. Optionnellement, l'interface de communication est prévue dans un terminal de communication du lave-linge.

L'utilisation d'un filtre équipé d'un indicateur de colmatage peut permettre d'anticiper la maintenance, sans montage compliqué sur une machine existante. L'indicateur de colmatage entre en action lorsque le niveau de colmatage de l'élément filtrant cause une augmentation de la perte de charge à travers celui-ci. Typiquement, l'indicateur est utilisé comme alarme avant le colmatage complet de l'élément filtrant.

Selon une utilisation additionnelle ou alternative, le filtre monté dans un circuit de vidange d'un lave-linge est pourvu d'un indicateur de colmatage permettant de visualiser un état de colmatage de la partie perméable à l'eau de l'élément filtrant. Ce type d'indicateur peut éventuellement permettre d'éviter d'utiliser une quelconque transmission, en évitant le besoin d'une source d'énergie. Par exemple, une cuve en partie transparente peut permettre une visualisation d'un état de colmatage et/ou une partie mobile peut afficher cet état de colmatage en tournant ou en occupant une position d'un témoin embarqué dans le filtre.

### Brève description des dessins

D'autres caractéristiques, détails et avantages apparaîtront à la lecture de la description détaillée ci-après, et à l'analyse des dessins annexés, sur lesquels :
la figure 1 montre, en vue de coupe schématique, un filtre pourvu de plusieurs couches de filtration supportées par un élément filtrant amovible, ce filtre destiné à un lave-linge pouvant fonctionner en dérivation seulement en cas de colmatage d'une des couches de filtration, selon un premier mode de réalisation.
la figure 2 est une vue schématique (ici en coupe) d'un filtre en ligne pour machine à laver, incluant un élément filtrant de conformation annulaire permettant une filtration centrifuge, conformément à un deuxième mode de réalisation
la figure 3 est une vue d'un filtre présentant de nombreuses similitudes avec le deuxième mode de réalisation, mais avec une filtration réalisée de façon centripète, correspondant à un troisième mode de réalisation.
la figure 4 est une vue de détail en coupe d'un filtre à plusieurs couches, dans lequel l'élément filtrant est pourvu de clapets dont la disposition est en série, pour permettre sélectivement une dérivation par rapport à une couche de filtration associée.
la figure 5 montre une vue latérale schématique (ici en coupe) d'une machine à laver, par exemple à usage domestique, incluant un filtre conforme à l'invention.
la figure 6 est une vue en coupe montrant un détail de la structure interne du filtre du côté de l'entrée dans un autre mode de réalisation, avec l'intégration d'un indicateur de colmatage.
la figure 7 est une vue d'extérieur d'un filtre, dont le boîtier est pourvu ici d'un couvercle pouvant former l'entrée du filtre.
la figure 8 est une vue en coupe transversale montrant un détail de la structure interne d'un filtre similaire à celui de la figure 2 mais avec une disposition des clapets modifiée, en incluant des clapets additionnels, ce filtre pouvant présenter un aspect extérieur identique ou similaire au filtre de figure 7.

### Description des modes de réalisation

Il est exposé ci-après, de façon détaillée, plusieurs exemples de modes de réalisation non limitatifs. Sur les différentes figures, des références identiques indiquent des éléments identiques ou similaires. Certaines dimensions peuvent être exagérées, modifiées à la hausse ou à la baisse dans certaines parties, pour les besoins de l'illustration.

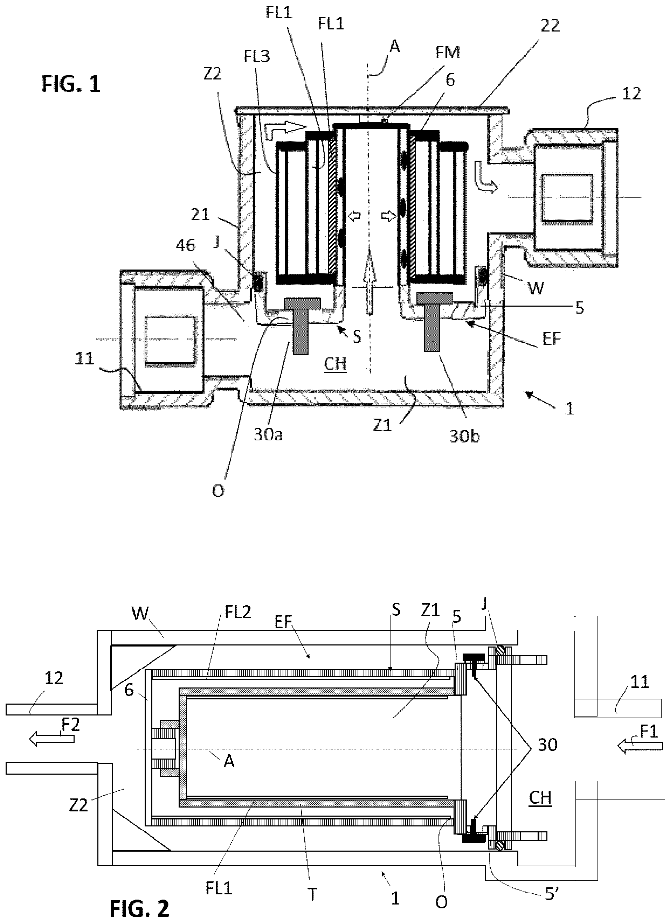

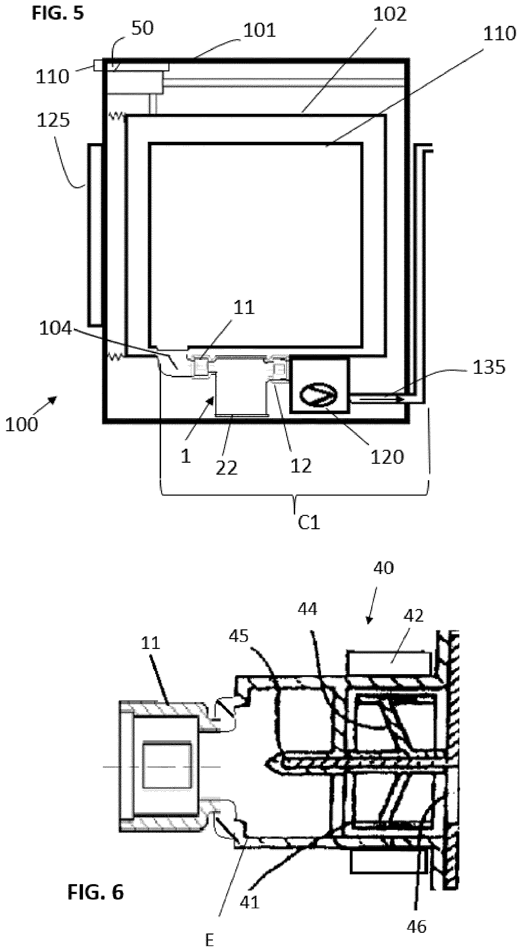

Le filtre 1 montré sur les figures 1 à 4 présente une enveloppe ou élément de paroi W pour permettre de délimiter une chambre de filtration CH. Il est ainsi formé un boîtier qui présente une entrée 11 et une sortie 12 pouvant être opposées l'une à l'autre, de sorte que la chambre de filtration CH est interposée entre l'entrée 11 et la sortie 12. L'entrée 11 est typiquement reliée à une conduite ou un puisard 104 d'une machine à laver, par exemple comme illustré schématiquement sur la figure 5. La sortie 12 peut permettre d'évacuer le flux F2 d'eau purifiée dans un circuit d'évacuation d'eau. Des exemples d'intégration dans une machine de lavage de linge seront détaillés plus loin. Le boîtier peut être compact, par exemple sans dépasser un maximum de 19 ou 22 cm pour la dimension maximale parmi les trois dimensions.

Ici, le boîtier est par exemple composé d'au moins deux parties complémentaires qui sont des éléments de boîtier creux 21, 22, comme visible notamment sur les figures 1 à 3 ou 7. Un de ces éléments 22 peut former un couvercle amovible, préhensible d'une seule main pour une personne s'occupant de la maintenance du filtre 1.

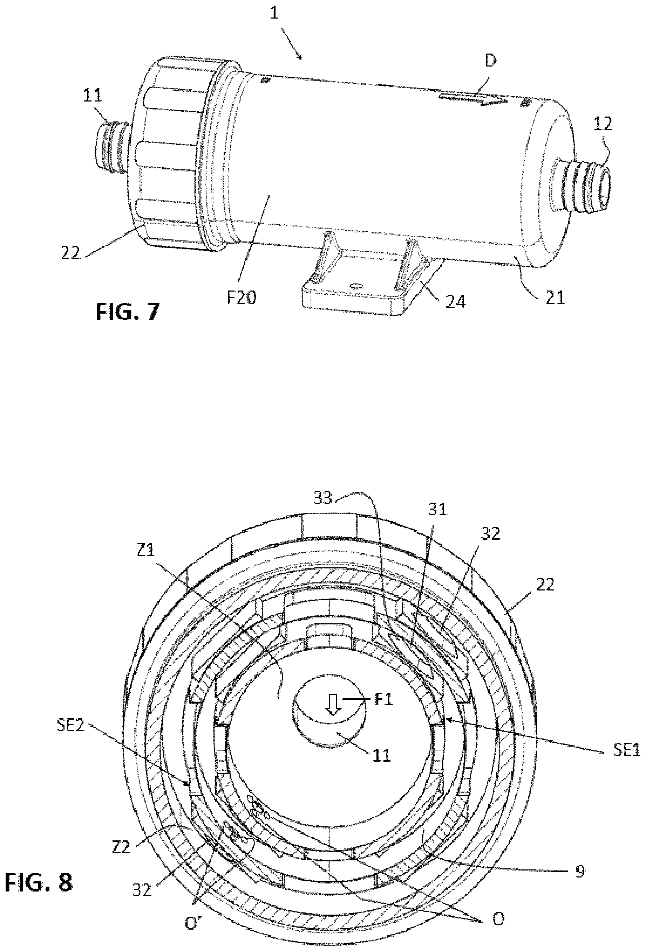

En référence aux figures 2 et 7, le couvercle 22 peut obturer une ouverture axiale de l'élément de boîtier complémentaire 21 formant une cuve. Ces deux éléments de boîtier peuvent être assemblés par des moyens de fixation amovible, par exemple par vissage ou autre mode de fixation sans outil. L'élément de boîtier 21 peut ainsi présenter un filetage, de façon à former une partie mâle apte à se fixer de façon étanche avec le couvercle 22 qui recouvre ce filetage. Un joint annulaire peut être prévu à l'interface de vissage. Ce type de visage permet de retirer le couvercle 22 de façon rapide et aisée, sans outil.

Le couvercle 22 peut inclure l'entrée 11, comme dans le cas non limitatif des figures 2 et 7. Une interface de montage/support du filtre 1 peut être optionnellement prévue ailleurs que sur le couvercle 22. Par exemple, une bride externe de fixation 24 peut être formée sur un côté de la face latérale F20 du boîtier. Un indicateur D, ici sous la forme d'une flèche, permet de montrer à un utilisateur où est la sortie 12 : sur la figure 7, il apparaît ainsi visiblement que la sortie 12 se trouve au fond de la cuve 21, à l'opposé du couvercle 22.

En référence aux figures 1 à 4 et 8, le fluide à filtrer, ici sous forme d'un flux d'eau sale F1, pénètre dans le volume intérieur du boîtier par l'entrée 11. Dans la chambre de filtration CH, ce flux F1 va passer typiquement à travers plusieurs couches de filtration FL1, FL2, FL3, chacune formée par un média filtrant. L'un au moins de ces médias filtrants est un textile non tissé. Ces couches de filtration FL1, FL2, FL3 font partie d'un élément filtrant EF qui peut être monté de façon amovible dans le boitier. Dans des options, le boitier de filtre forme une cartouche qui se rechange dans sa totalité, sans nécessité de retirer sélectivement l'élément filtrant EF hors du boîtier.

L'élément filtrant EF est monté et fixé contre l'élément de paroi W, de façon à permettre une division de la chambre de filtration CH en deux zones distinctes : une zone Z1 d'amont de la filtration et une zone Z2 d'aval de la filtration. Un joint J, porté par l'élément filtrant EF, peut être prévu à l'interface de contact avec l'élément de paroi W, de façon à permettre l'étanchéité entre ces zone Z1 et Z2.

Dans le premier mode de réalisation montré sur la figure 1, l'élément filtrant EF présente un flasque 5 qui fait partie d'une structure de support S pour supporter la ou les couches de filtration. Ici, le nombre de trois couches de filtration FL1, FL2, FL3 est donné à titre d'exemple non limitatif. L'ensemble des couches de filtration FL1, FL2, FL3 correspond à une partie perméable à l'eau intégrée dans l'élément filtrant EF. La structure de support S est en matériau qui est de préférence imperméable à l'eau, typiquement en un matériau rigide en plastique. Cette structure est cependant ajourée sélectivement dans sa ou ses parties d'interface avec la partie perméable à l'eau, comme bien visible sur la figure 1, afin notamment de permettre au flux d'eau d'atteindre une première face perméable de cette partie perméable et/ou de poursuivre son chemin vers une autre couche de filtration. Dans certaines options, cette structure S forme une grille et/ou peut être considérée comme une couche de préfiltration

### Exemple d'intégration du filtre

En référence à la figure 5, le filtre 1 peut être monté dans une machine à laver 100 qui peut être une "simple" machine à laver, c'est-à-dire une machine à laver qui ne peut que laver et rincer le linge, ou une machine à laver-sécher, c'est-à-dire une machine à laver qui peut également sécher le linge. Ici, il est illustré une machine à laver 100 qui est du type à chargement frontal. Mais plus généralement, il ressort de ce qui suit que les machines à laver du type à chargement par le haut peuvent également bénéficier d'un tel filtre 1.

La machine 100 est un lave-linge qui comprend de préférence une structure d'habillage 101 de forme sensiblement parallélépipédique, qui est susceptible de contenir des composants (par exemple, hydrauliques, électroniques et/ou électromécaniques) permettant le fonctionnement du lave-linge. Seuls quelques composants sont ici exposés, qui suffisent à la compréhension d'une utilisation typique du filtre 1 selon l'invention.

La machine 100 illustrée comprend, intérieurement, un tambour 110 rotatif, de préférence perforé (par exemple, de forme sensiblement cylindrique), configuré pour tourner afin de retourner le linge qui y est chargé. Le tambour 110 peut être enfermé dans une cuve de lavage 102, de préférence de forme cylindrique creuse, qui est adaptée pour enfermer le tambour 110 et pour contenir des liquides de traitement (par exemple, de l'eau de lavage, des solutions de détergent ou de l'eau de rinçage) pour le traitement du linge. La cuve 102 comprend, par exemple, dans son fond, un puisard 104 destiné à canaliser les liquides de traitement qui s'y trouvent (et à permettre leur évacuation, comme indiqué ci-dessous).

Le circuit de vidange C1 peut comporter une pompe motorisée 120, de préférence placée en aval du puisard 104, pour favoriser la vidange des liquides de traitement, et un tuyau de vidange 135, de préférence placé en aval de la pompe 120, pour évacuer les liquides de traitement dans le réseau d'égouts (et/ou vers un circuit de recirculation des liquides de traitement, lorsqu'il est prévu). Le tuyau de vidange 135 peut comprendre avantageusement une partie sensiblement verticale s'étendant au moins partiellement à une hauteur supérieure à celle de la pompe 120. Cette partie peut s'étendre à l'opposé d'une porte 125 de la machine 100 qui donne accès à un volume interne du tambour 110, ici dans le cas d'une machine à ouverture latérale.

Dans des modes de réalisation présentés, il est prévu un filtre 1 adapté pour être positionné/installé de manière amovible dans le puisard 104 ou en aval de celui-ci, afin d'intercepter et filtrer les liquides de traitement lors de leur passage de la cuve 102 au circuit de vidange C1. Selon certaines options, le boîtier du filtre est sélectivement accessible pour permettre une opération de rechange de l'élément filtrant EF, par exemple après ouverture d'une partie de boîtier 22 formant un couvercle.

Afin de faciliter l'installation du filtre 1 dans une machine à laver, celui-ci peut être fourni avec un tube ou tuyau flexible de connexion fluidique, à raccord rapide, par exemple présentant une prise mâle d'insertion pour une connexion étanche à un tuyau (tuyau d'évacuation) disponible du circuit de vidange C1.

Le boîtier du filtre 1 peut être raccordé au puisard 104 ou juste en aval d'un filtre à peluches, par exemple au niveau d'une canule formant l'entrée 11 et qui fait saillie par rapport au reste du boîtier. Eventuellement, un tuyau additionnel fourni avec le filtre réalise la connexion en étant connecté à ses deux extrémités opposées à un tuyau /canalisation d'une part, et à l'entrée 11 (canule) d'autre part. Plus généralement, l'entrée 11 peut présenter un raccord, de préférence un raccord mâle, de connexion avec un tuyau (fourni avec le filtre 1 ou disponible). La sortie 12 peut communiquer avec la pompe 120, de sorte que le filtre 1 est agencé en amont de cette pompe 120. Ceci n'est qu'un exemple d'intégration. En pratique, le filtre 1 peut être prévu pour se monter en aval d'un filtre à peluches/charpie servant à protéger la pompe 120. Une intégration en aval de la pompe 120 est ainsi possible également, pour un filtre 1 distinct et séparé du filtre à peluches/charpie.

### Modes de réalisation de l'élément filtrant

L'élément filtrant EF peut être de forme générale annulaire, en s'étendant entre deux extrémités axiales opposées. En référence aux figures 1 à 4, le flasque 5 correspond à une de ces extrémités axiales. L'ensemble des couches de filtration FL1, FL2, FL3, peut former un ensemble ou partie de filtration, perméable à l'eau, portée par la structure de support S. Ces couches FL1, FL2, FL3 peuvent s'étendre chacune de façon annulaire, autour de d'un axe de révolution de l'élément filtrant EF.

Dans le cas de la figure 1, la direction de l'axe central ou longitudinal A de cet élément filtrant EF est perpendiculaire à la direction générale d'écoulement entre l'entrée 11 et la sortie 12 du boîtier de filtre. Dans d'autres options, cet axe A est parallèle à une direction générale d'écoulement au travers de l'entrée 11 et/ou de la sortie 12. Éventuellement cet élément filtrant EF peut être introduit dans la chambre de filtration CH au travers d'une ouverture latérale 14 du boîtier, placée de façon intermédiaire entre l'entrée 11 et la sortie 12. L'élément de boîtier 22 forme ici un couvercle amovible permettant d'obturer, de façon étanche aux liquides, cette ouverture latérale 14. La fixation du couvercle est typiquement d'un genre connu en soi, par exemple par vissage, quart de tour, optionnellement en impliquant un serrage à l'aide de vis ou autres éléments déverrouillage de la fixation du couvercle 22. Plus généralement tout type de fixation amovible peut être utilisé, ce qui permet de pouvoir retirer l'élément filtrant EF dans une opération de rechange ne nécessitant pas de changer le boitier.

Le flasque 5 correspond à une extrémité axiale de l'élément filtrant EF qui peut être proche de l'entrée 11 et au contact du flux d'eau entrant F1. Un autre flasque 6 peut être prévu à l'opposé, en formant l'autre extrémité axiale qui est ici proche du couvercle 22. Plus généralement, chaque média filtrant ou couche de filtration FL1, FL2, FL3 peut s'étendre de façon annulaire, autour d'un même axe central de l'élément filtrant EF, en s'étendant de l'un à l'autre des flasques 5 et 6. Le flasque 6 appartient ici également à la structure de support S, qui correspond à une ossature de l'élément filtrant EF.

Le flasque 5 peut présenter une portion radiale de délimitation d'un espace intercalaire 9, situé entre deux médias ou couches de filtration FL1, FL2. Dans l'exemple non limitatif des figures 2 et 8, le flasque 5 qui est proche de l'entrée peut aussi être solidarisé sur l'extrémité ouverture de la cuve ou élément de boîtier similaire, à l'aide d'une extension 5', de sorte que la portion radiale du flasque s'étende entre l'espace intercalaire 9 et une région de fixation RF pour maintenir l'élément filtrant EF dans une position déterminée à l'intérieur de la chambre de filtration, de préférence en maintenant espacée la couche de filtration FL2 radialement la plus extérieure de l'élément filtrant EF par rapport à la cuve 21 externe.

Dans les cas avec filtration centrifuge, le flasque 6 peut correspondre à un embout fermé, sans ouverture axiale. Lorsqu'un espace intercalaire 9 est prévu, le flasque 6 peut alors obturer axialement cet espace intercalaire 9, sans obturer la sortie 12 : un espacement axial de ce flasque 6 par rapport au débouché de la chambre CH vers la sortie 12 est permis dans certaines formes de réalisation.

Lorsqu'il est prévu un couvercle 22, le flasque 6 peut présenter des moyens FM de fixation avec une partie d'accrochage appartenant au couvercle 22, du côté d'une face interne de ce couvercle 22. C'est le cas dans la figure 1, qui reflète un exemple de solidarisation flasque 6 - couvercle 22. Les moyens FM de fixation rendent l'élément filtrant EF solidaire du couvercle 22, en permettant ainsi de retirer l'élément filtrant EF avec le couvercle 22.

Du côté du flasque 5 (qui est un flasque distant du couvercle comme dans la figure 1 ou proche du couvercle comme dans la figure 2), l'élément filtrant EF peut présenter un moyen d'étanchéité, par exemple sous la forme d'un joint annulaire J, ici un joint torique élastomère. Ce joint J participe à la séparation étanche de la zone d'amont Z1, située sous le flasque 5 et/ou entre ce flasque 5 et l'entrée 11, par rapport à la zone d'aval Z2 où circule le flux d'eau épuré F2 vers la sortie 12. De façon plus générale, la structure de support S peut être adaptée pour supporter un joint J ou intégrer une partie/lèvre d'étanchéité analogue, qui réalise un contact d'étanchéité sur l'élément de paroi W de délimitation de la chambre de filtration CH, afin de séparer entre elles les zones Z1 et Z2.

La structure de support S peut supporter une partie perméable où sont placées les couches de filtration FL1, FL2, FL3. Un tube central peut ainsi faire partie de cette structure S lorsque l'élément filtrant EF a une configuration généralement annulaire. La structure de support S présente aussi une partie qui forme un siège pour au moins un clapet 30a, 30b. Cette partie est par exemple sous la forme d'une extension du tube ou sous la forme d'un flasque 5 de recouvrement d'une partie axiale du ou des médias de filtration/couches de filtration FL1, FL2, FL3.

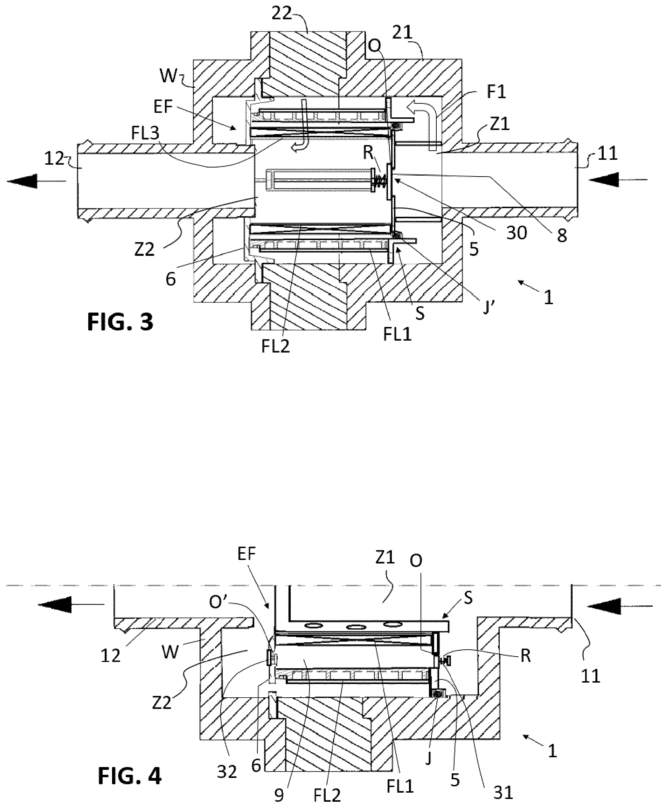

Chaque clapet 30a, 30b, 30, 31, 32 peut former un clapet mobile entre une position par défaut et une position décalée, sachant que la position par défaut permet d'obturer l'accès à une ouverture dite de dérivation O, O' utilisée sélectivement en cas de colmatage plus en amont, afin de décharger l'eau malgré l'absence de perméabilité d'une couche de filtration. Chacune des ouvertures de dérivation O, O' fait communiquer la zone d'amont Z1 et la zone d'aval Z2 au travers de la structure de support S, soit pour que l'eau rejoigne directement la zone d'aval Z2 par l'ouverture O, O', soit pour rejoindre un espace intercalaire 9 entre deux couches successives de filtration FL1, FL2 (voir par exemple le cas de la figure 4). Cette disposition est également applicable à d'autres modes de réalisation. Dans certains cas, une ouverture de dérivation O' est prévue pour que l'eau circulant dans l'espace intercalaire 9 soit évacué/déchargé en cas de colmatage d'une couche de filtration FL2 séparant cet espace 9 de la zone d'aval Z2.

Plus généralement, il est compris que chaque clapet est configuré pour occuper sa position décalée, typiquement sous l'effet d'une poussée du liquide en surpression provenant de l'entrée 11, afin de permettre une circulation d'eau vers la zone d'aval Z2 via l'ouverture de dérivation associée O, O'. En pratique, la mobilité du clapet 30a, 30b, 30, 31, 32 est paramétrée de façon adéquate, par exemple en réglant la raideur d'un ressort associé (ou autre organe de rappel élastique sollicitant le clapet vers sa position d'obturation), pour que l'ouverture O, O' de dérivation soit libérée seulement lorsque la partie perméable à l'eau est encrassée/colmatée, avec par exemple un débit de passage réduit d'au moins 70% ou 90% par rapport au débit obtenu dans les mêmes conditions de pompage dans l'état initial de l'élément filtrant EF. En pratique, on comprend que l'excès de pression doit simplement dépasser un seuil prédéfini pour permettre l'effet de décharge via la ou les ouvertures de dérivations O, O' qui sont fermées initialement/par défaut dans les conditions habituelles d'écoulement du flux d'eau entre l'entrée 11 et la sortie 12.

En référence à la figure 1, l'élément filtrant EF présente un flasque 5 sur laquelle vient en appui une partie d'obturation mobile 33 d'un clapet 30a, 30b. Le flasque 5 supporte ici ce type de clapet 30a, 30b autour d'un passage central d'accès à l'espace intérieur creux de l'élément filtrant EF qui fait partie de la zone d'amont Z1. Sur la figure 3, la disposition est inversée avec le passage central qui constitue l'ouverture O obturée par un clapet 30 car l'espace intérieur creux fait partie de la zone d'aval Z2.

Dans l'exemple des figures 1 à 4, la partie mobile du clapet 30a, 30b ou 30 ou 31, 32 vient s'appuyer sur le pourtour d'une ouverture O ou O' pour traverser la structure de support S ailleurs que dans la partie perméable de l'élément filtrant EF. De telles ouvertures O, O' peuvent être prévues dans des flasques 5, 6 ou autres embouts formant une extrémité de recouvrement de la partie perméable à l'eau.

En référence à la figure 1, l'ouverture O est formée dans le flasque 5, entre une zone d'étanchéité flasque 5 - élément de paroi W et un passage central pour faire circuler le flux d'eau à épurer dans un l'espace intérieur creux de l'élément filtrant EF. Dans le cas illustré ici, la filtration peut être de type centrifuge, avec une partie de la zone d'amont Z1 incluant l'espace intérieur creux délimitée par une face interne de la première couche de filtration FL1. En cas de surpression dans la zone d'amont Z1, la partie mobile du clapet 30, 30b se décolle d'une bordure de l'ouverture O, formant le siège du clapet. Sur la figure 1, la partie mobile du clapet 30a et/ou 30b peut former un contact annulaire sur une face du flasque 5 formant la première extrémité axiale de l'élément filtrant. Cette face du flasque 5, pour le contact avec la partie mobile, est ici située du côté opposé à l'espace intérieur creux de l'élément filtrant EF. En cas de surpression du côté amont, la partie mobile recule, ce qui permet (en cas de colmatage) de faire circuler de l'eau autour de l'élément filtrant EF, du côté de la zone d'aval Z2.

Ici, chaque clapet 30a, 30b peut occuper une position décalée qui permet une dérivation complète (contournement total) de la partie filtrante/perméable à l'eau incluant la ou les couches de filtration FL1, FL2, FL3. Typiquement, le flux d'eau F1 ne passera plus par l'espace intérieur creux. Un effet de dérivation analogue peut être obtenu avec une filtration centripète, par exemple avec un clapet monté mobile sur le flasque 6, en minimisant ou en évitant la circulation de l'eau dans l'espace intérieur creux.

Bien entendu, l'élément filtrant EF montré sur la figure 1 correspond à un premier mode de réalisation qui peut être modifié, en particulier du côté de l'extrémité axiale proche de l'entrée 11, éventuellement en montant différemment le ou les clapets. Ainsi, dans le deuxième mode de réalisation visible sur la figure 2, il est prévu un ou plusieurs clapets 30 qui se déplacent suivant une direction radiale, et non pas parallèlement à un axe central A de l'élément filtrant EF (cas de la figure1). Dans cette forme de réalisation, un clapet 30 est mobile, sous l'effet du différentiel de pression (surpression côté amont), en se déplaçant radialement vers l'extérieur, dans le même sens que la direction de filtration au travers du ou des média filtrants de la partie perméable à l'eau disposée entre les flasques 5 et 6.

Par ailleurs, l'extension/orientation de l'élément filtrant EF peut être modifiée, comme illustré par la différence d'orientation de cet élément dans la chambre CH, qui peut être aussi bien sensiblement perpendiculaire à l'orientation générales des canules d'entrée 11 et de sortie 12 (cas non limitatif de la figure 1) ou parallèle à cette orientation. L'élément filtrant EF de la figure 1 peut être disposé comme dans la figure 2, par exemple en utilisant un couvercle 22 amovible pourvu de la sortie 12. Inversement, un élément filtrant EF identique ou similaire à celui de la figure 2 peut être monté dans le boitier de la figure 1.

Une ouverture O auxiliaire/de dérivation peut être formée dans le flasque 5 dans une portion radiale de celui-ci ou dans une projection ou extension 5' du flasque 5. La figure 2 permet d'illustrer un montage d'un clapet 30 qui obture une ouverture O située dans une extension 5' qui fait saillie axialement à l'opposé de l'au moins une couche filtrante FL1, FL2.

Dans le cas de la figure 1, l'ouverture O permet un contournement d'au moins deux couches de filtration FL1, FL2. Généralement, une telle ouverture O communique avec un espace en aval d'au moins une couche FL1 en matériau de filtration, cet espace en aval s'étendant à l'intérieur de la chambre de filtration CH. Cet espace peut être l'espace isolé de la zone d'amont Z1 par un joint J. Le montage d'un tel joint J dans une gorge annulaire/périphérique du flasque 5 est préféré, en particulier dans le cas d'une filtration de type centrifuge.

Dans des formes de réalisation, un clapet est conçu en matériau élastiquement déformable, par exemple en silicone, élastomère, caoutchouc synthétique. Optionnellement, ce matériau permet de présenter une partie d'obturation 33 qui présente une flexibilité, cette partie d'obturation 33 pouvant être amincie par comparaison à une partie de tige faite du même matériau. La partie d'obturation 33 peut présenter ou être inclue dans une forme de tête de champignon. Pour optimiser l'effet de décharge, un groupe de plusieurs ouvertures O, O' peut être distribué, par exemple de façon annulaire, autour d'une tige du clapet 30, 31, 32. La partie d'obturation 33 peut obturer simultanément les ouvertures du même groupe, comme cela est montré par exemple sur la figure 8. Le clapet 31, 32 peut être réalisé d'une seule pièce, notamment lorsqu'il présente une forme à tête de champignon ou autre forme permettant un effet charnière comparable.

En référence à la figure 8, on comprend que plusieurs ouvertures O, O' peuvent être associées à une même partie d'obturation mobile 33 d'un clapet 31, 32. Ceci permet de diviser/répartir le flux de décharge dans plusieurs zones séparées sans ajouter un clapet pour chaque ouverture de dérivation. Plus généralement, le clapet 30, 30a, 30b, 31, 32 peut éventuellement être formé d'une seule pièce, en étant clipsé dans un puits ou une ouverture d'ancrage prévue dans la structure de support S. Cette ouverture d'ancrage peut être distincte des ouvertures O, O' de dérivation, qui sont de préférence réparties de façon annulaire autour de l'ouverture d'ancrage où est typiquement reçue une partie de tige ou autre organe d'insertion du clapet 31, 32.

Le clapet 30, 30a, 30b, 31, 32 peut présenter une forme de disque flexible reliée à l'extrémité d'une partie de tige, comme cela est bien visible sur la figure 8. Le sommet du clapet peut être décollé/espacé de la région de siège, de sorte que la tête de clapet qui inclut la partie d'obturation 33 est creuse, éventuellement en ayant une forme de cloche (ou coupelle inversée) plus ou moins bombée. Un effet charnière, procuré au niveau d'une région de pliage annulaire (charnière élastique pouvant être obtenue par rétrécissement local de matière), permet à cette partie d'obturation 33 de se soulever de la surface de siège en cas de surpression du côté plus en amont. Un effet de rappel élastique permet un retour à la conformation d'obturation dès que la surpression locale sous la coupelle formée par la partie d'obturation 33 n'est plus suffisante. Plus généralement, l'obturation de plusieurs ouvertures O, O' par une seule pièce, élastiquement déformable et à partie simple d'obturation 33, est applicable aux autres modes de réalisation décrits/illustrés et à diverses autres options de conception et montage de l'élément filtrant EF.

Quel que soit le mode d'intégration de ce clapet 30, 30a, 30b, 31, 32, celui-ci peut être de type anti-retour et mobile sous l'effet d'une poussée dirigée vers la zone d'aval Z2. Le filtre 1 peut présenter une dissymétrie dans sa connectique, de façon à différencier l'entrée 11 de la sortie 12. Eventuellement, un tuyau fourni avec le filtre 1 ne peut se connecter qu'à un embout déterminé du filtre 1, par exemple l'entrée. Des indications visuelles peuvent aussi être prévues pour montrer que l'entrée doit être connectée à l'opposé du tuyau de vidange 135. Ainsi, on s'assure que le sens de filtration est correct, avec chaque clapet 30, 30a, 30b, 31, 32 apte à permettre une décharge vers une zone d'aval Z2, en cas de colmatage.

Pour stabiliser la position du clapet 30a, 30b, celui-ci peut présenter une tige d'extension parallèle à la direction de poussée/direction de recul de la partie mobile. Dans certaines options de réalisation, cette tige permet le guidage linéaire d'un clapet dont la portion d'obturation mobile est essentiellement rigide : seule une portion annulaire rapportée/portée par la portion d'obturation mobile peut être en matériau élastiquement déformable, afin de réaliser le contact d'étanchéité. Un élément de rappel élastique, par exemple un organe à effet ressort (ressort hélicoïdal ou à lame) peut être prévu pour permettre, par défaut, à la portion d'obturation mobile de fermer de façon étanche l'ouverture O associée. Un tel élément de rappel élastique R, éventuellement du genre illustré sur les figures 3 et 4 peut présenter une extrémité fixe/immobile, à l'opposé d'une extrémité rendue solidaire de la partie mobile d'obturation. Bien entendu, le type de clapet peut être interchangeable dans les exemples illustrés, en fonction des besoins. On comprend qu'un clapet réalisé d'une seule pièce facilite les opérations d'assemblage de l'élément filtrant EF.

Un clapet à tige peut être assemblé en utilisant un ressort ou organe R similaire monté autour de la tige. La tige est optionnellement intégralement formée avec la partie mobile (avec un profil en « T » en vue de coupe longitudinale du clapet), en étant guidé dans un manchon de guidage prévu dans la structure de support S. Dans le cas non limitatif de la figure 1, on comprend que les deux clapets 30a, 30b peuvent être associés à un moyen de rappel élastique et agencés en parallèle, en étant montés sur le même flasque 5, de façon à présenter chacun une tige de guidage associée à une partie d'obturation respective. Alternativement, les deux tiges visibles sur la figure 1 peuvent être associées à une partie d'obturation commune prévue pour obturer une ouverture de grande section, formée dans le flasque 5. Une telle ouverture peut alors être allongée, dans une direction circonférentielle, et le cas échéant courbée autour de l'espace intérieur creux de l'élément filtrant EF. Cette option peut permettre de réaliser une dérivation avec une section de passage importante, éventuellement comparable ou identique à la section de l'espace intérieur creux. Bien entendu, cette disposition n'est pas limitative, et peut être - alternativement ou en complément - être réalisée ailleurs dans la structure de support S, par exemple au niveau d'un flasque 6 pour décharger de l'eau depuis un espace intercalaire situé entre deux des couches de filtration.

Dans certaines options, on peut mixer le type de clapet, avec au moins un clapet qui est du type pincé ou rigidement fixé dans un partie de support et qui présente une flexibilité intrinsèque permettant une déformation pour un changement de conformation du clapet. Dans ce cas également, c'est une partie mobile (entièrement flexible) qui est poussée en arrière pour libérer l'ouverture O.

Plus généralement, le clapet 30a, 30b, 31, 32, 30 peut être intégré de diverses façons, avec éventuellement une flexibilité de matériau. La configuration du clapet permet un effet anti-retour, par sa conception intrinsèque ou par son montage sollicité par un élément de rappel.

On a illustré une filtration centrifuge sur les figures 1, 2 et 8. Bien entendu la filtration peut aussi être réalisée de façon centripète.

Par exemple, en référence à la figure 3, il suffit pour cela que l'espace intérieur creux corresponde à une partie de la zone d'aval Z2, le flasque 5 formant une barrière obturant cet espace intérieur creux (pas de passage central). Ici cette obturation par le flasque 5 est réalisé du côté axial de l'élément filtrant EF au niveau duquel le flux F1 est amené/entre dans la chambre CH. Dans ce type de variante, l'espace intérieur creux communique directement avec la sortie 12. Comme visible par exemple sur la figure 3, une étanchéité annulaire entre la structure de support S et l'élément de paroi W de délimitation de la chambre de filtration CH peut alors être prévue autour d'un autre flasque 6 qui est opposé axialement au flasque 5 formant la première extrémité axiale de l'élément filtrant EF. L'espace intérieur creux peut typiquement être délimité par une face intérieure d'une membrane ou couche de filtration FL3. Dans des options, cette couche FL3 est apte à retenir les microplastiques, de préférence des microplastiques dont la taille maximale est de l'ordre de 0,5 ou 1 mm.

La dernière couche (ici la couche FL3 dans l'option de la figure 3) est une deuxième, troisième ou même une quatrième couche dans le sens de la filtration, l'élément filtrant EF disposant ainsi de plusieurs niveaux de filtration. La composition des couches FL1, FL2, FL3 peut varier afin de filtrer des particules de plus en plus petites, la dernière couche pouvant séparer des particules solides dont la taille maximale n'excède pas 1 mm (particules submillimétriques).

Le clapet 30 peut être disposé de façon centrale, comme par exemple dans le cas de la figure 3. Dans ce cas la dérivation peut correspondre à un chemin court, relativement direct (plus court que le trajet en fonctionnement normal du filtre 1), en communiquant avec la zone d'aval Z2 directement par l'espace intérieur creux central de l'élément filtrant EF.

Le clapet 30 peut être supporté et/ou guidé par une sous-partie intérieure/centrale de la structure de support S, qui est éventuellement amovible par rapport à une autre sous-partie périphérique de la structure de support S. La fixation entre ces sous-éléments SE1, SE2 de l'élément filtrant EF peut être réalisée dans une ou plusieurs régions de fixation RF1, RF2. Un vissage, une fixation de type baïonnette, un emboîtage élastique (clipsage) ou encliquetage, une soudure, éventuellement une combinaison de ces fixations, peuvent permettre la solidarisation du sous-élément SE1 plus central au sous-élément SE2 périphérique. La ou les régions de fixation RF1, RF2 sont typiquement décalées axialement vers l'extérieur par rapport aux couches de filtration, lorsque l'élément filtrant EF présente une conformation annulaire. Une étanchéité annulaire est par exemple obtenue à une jonction avec contact radial entre les sous-éléments SE1, SE2 constitutifs de la structure de support S.

La sous-partie centrale peut être un premier sous-élément SE1 incluant un tube ajouré T qui supporte au moins une couche filtrante FL1, FL2, éventuellement comme le tube T intérieur montré sur la figure 2. Plus généralement, chaque sous-élément SE1, SE2 peut permettre de supporter une toile, média plus épais et ou autre couche de filtration, par exemple en ayant une partie tubulaire ajourée. Dans le cas des figures 2 et 8, on peut prévoir des ouvertures allongées suivant la direction de l'axe longitudinal A de l'élément, séparées entre elles par des piliers dont au moins un est alignement avec la zone d'intégration d'un clapet 31, 32. Ceci permet de renforcer le sous-élément SE1, SE2, en particulier pour supporter des étapes d'assemblage automatisées pour l'insertion des clapets, par exemple par emboîtage élastique d'une partie de tige.

Dans certaines options, la région d'obturation couverte par un clapet 30, 30a, 30b, 31, 32 est une région localement plus épaisse que le reste de la pièce constituant le sous-élément SE1, SE2, ce qui compense la présence des ouvertures (ouverture(s) O, O' et ouverture d'ancrage pour le montage du clapet). Un tel accroissement d'épaisseur est par exemple illustré sur la figure 8.

Pour s'assurer de l'étanchéité à l'eau aux extrémités axiales de l'élément filtrant EF, un ou plusieurs joints J' intercalaire(s) peuvent être portés par une des sous-parties ou sous-éléments SE1, SE2 de la structure de support S, en réalisant un contact annulaire radial d'étanchéité. Dans le cas de la figure 3, ce joint J' est intercalé entre la partie de flasque externe (de la sous-partie périphérique SE2) et la partie de flasque interne (de la sous-partie centrale SE1). Ce type de joint J' serait aussi utilisable dans un montage par emboîtement avec insertion axiale du sous-élément SE2 comme montré sur la figure 2, en réalisant un contact d'étanchéité radiale situé par exemple dans ou en position adjacente à la région de fixation RF2.

Le blocage ou verrouillage en position axiale de la sous-partie centrale, ici SE1, peut être permis par au moins un organe de butée venant en appui contre l'intérieur du boîtier de filtre, à une première extrémité axiale, et éventuellement par une fixation et/ou un appui, par exemple contre un rebord intérieur d'une partie de flasque appartenant à la sous-partie périphérique SE2, réalisée à l'autre extrémité. Dans d'autres options, une fixation avec effet de retenue axiale du sous-élément périphérique SE2 est permis par un rebord de prise, une collerette ou une face latérale de fixation prévue sur ce sous-élément SE2. Il est ainsi obtenu une région de fixation RF, par exemple par la collerette C ou rebord de prise venant se solidariser sur l'extrémité de la cuve 21 qui forme l'ouverture d'accès pour l'insertion de l'élément filtrant EF.

Dans certaines variantes, le clapet 30 peut être solidaire d'un couvercle ou d'une partie de boîtier, par exemple une partie incluant la sortie. Dans ce cas, cette partie peut embarquer le clapet mobile 30 et former une tête de filtre. Une portion tubulaire ou autre portion d'insertion peut alors s'insérer dans l'espace intérieur creux de l'élément filtrant EF, jusqu'à occuper une position de montage dans laquelle la portion d'obturation du clapet 30 vient en appui (par l'intérieur) contre le flasque 5 délimitant l'ouverture O de dérivation. Ceci permet d'obturer l'ouverture O, pour la position fermée de la tête de filtre/couvercle. Ceci peut correspondre à une légère variante de la figure 3, avec une partie de boîtier modifiée pour que la sortie 12 et la portion d'insertion où est monté le clapet 30 fassent partie de cette tête de filtre. Le ressort R ou organe de rappel élastique adéquat est alors porté par la portion d'insertion pour que le clapet 30 vienne s'ajuster dans sa position d'obturation de l'ouverture O, qui est typiquement une ouverture centrale. Seule une surpression dans la zone d'amont Z1 peut permettre de solliciter un effort allant suffisamment à l'encontre de la force de rappel pour permettre le recul de de la partie d'obturation (en direction de la sortie 12).

En référence à présent à la figure 4, on peut voir un type d'agencement en série de clapets 31, 32. Ici, il est prévu par exemple une ouverture O, O' de dérivation qui est placée dans une portion/région de flasque située radialement entre deux couches de filtration FL1, FL2 disposées en série dans le sens de la filtration. D'autres dispositions de ce type d'ouverture de dérivation, de façon interposée entre deux couches peuvent être obtenues.

Avec ce type d'agencement, l'élément filtrant EF installé dans le circuit C2 de vidange peut fonctionner selon les différentes situations suivantes :
a/ réalisation d'une filtration complète pour traiter le flux F1 et faire circuler un flux F2 épuré dépourvu de particules solides séparés dans l'une puis l'autre ou les autres couches suivantes des couches de filtration (ici couches successives FL1, FL2), tant qu'aucune des couches ne présente un état colmaté ; dans cette situation, aucun clapet 31, 32 n'occupe sa position décalée d'ouverture.
b/ si la première couche FL1 est colmatée, celle-ci permettant une filtration moins fine que la couche suivante FL2, alors le clapet 31 est décalé sous l'effet d'une surpression locale dans la zone Z1 et sa position d'ouverture permet de décharger le flux F1 dans l'espace intercalaire 9 ; il est alors réalisé une filtration seulement par la ou les couches situées en aval de la couche FL1 contournée par la dérivation de l'ouverture O.
c/ si la couche FL2 est colmatée, cumulativement ou indépendamment d'un colmatage de la première couche FL1, le blocage de la circulation d'eau dans la chambre de filtration a pour effet d'obtenir l'état ouvert du clapet 31 et également du clapet 32, compte tenu de l'égalisation de pression entre l'espace intercalaire 9 et la zone d'amont Z1 (effet de surpression qui permet de décaler le clapet 32 pour libérer l'ouverture O'). Dans cette situation c/, le flux peut être déchargé sans effet de filtration, ce qui a le mérite au moins de ne pas bloquer la machine à laver 100.

Dans la situation b/, afin d'éviter un colmatage trop rapide de la couche de filtration FL2, il peut être prévu d'utiliser une grille 20 tubulaire (typiquement en matériau relativement rigide, plastique ou métallique), appartenant par exemple à la structure de support S, qui sépare des particules relativement grosses, par exemple de taille supérieure ou égale à 2 ou 4 mm, avant que le flux de décharge n'atteigne la couche de filtration FL2 qui peut séparer des microplastiques dont des particules ayant une taille maximale de l'ordre de 0,5 ou 1 mm seulement. Ici, la filtration peut être maintenue en étant peu ou pas dégradée. Cependant, une alerte de colmatage peut déjà être déclenchée dans la situation b/. Eventuellement, un compteur de jours peut être déclenché dès le passage de la situation a/ à la situation b/ et/ou une durée maximale avant un changement effectif de l'élément filtrant peut être notifié à un système d'avertissement, un téléphone de l'utilisateur ou autre terminal de communication.

Typiquement, la situation de type c/ ou situation analogue dans laquelle le flux d'eau ne traverse plus la moindre couche de filtration FL1, FL2, FL3 peut être empêchée en avertissant ou signalant de façon visible un problème concernant au moins une des couches de filtration FL1, FL2 qui n'est pas la dernière couche de filtration dans le sens de la circulation du flux dans le fonctionnement normal/initial du filtre 1. Dans le cas d'un filtre 1 ayant une seule couche de filtration, ceci est aussi applicable en avertissant immédiatement du colmatage (et du besoin de changement d'élément filtrant EF), afin que ce colmatage ne soit pas bloquant pour achever un lavage, tout en permettant une réaction rapide pour se retrouver dans une situation initiale (équivalent de la situation a/ décrite ci-dessus, dans le cas avec une seule couche de filtration).

Le fait de disposer de plusieurs couches de filtration est avantageux pour, d'une part ralentir le besoin de maintenance, et d'autre part de permettre le cas échéant de disposer d'une période d'avertissement intermédiaire au cours de laquelle l'utilisateur a encore un peu de temps avant de procéder à la rechange, tout en ayant une fonction de filtration encore opérationnelle (ce qui est meilleur pour éviter de décharger des microplastiques et particules similaires indésirable, donc bénéfique *in fine* pour l'environnement)

En référence à la figure 4, au moins un des clapets 31, 32 peut être en appui contre un bord annulaire formant un siège de clapet, au niveau par exemple d'une région d'un flasque qui est décentrée. Le clapet 31, 32 peut avantageusement être guidé par une tige. Plus généralement, on comprend que le clapet 31, 32 est de type anti-retour et mobile par une poussée qui dépasse la force de rappel élastique d'un composant/ressort associé à la partie d'obturation du clapet 31, 32. L'assemblage de l'élément filtrant EF, qui inclut différentes couches de filtration FL1, FL2, peut être facilité en montant de façon concentrique une sous-partie dans volume intérieur de l'autre sous-partie, ce qui correspond aussi à une disposition compacte. En effet la distance radiale inter-couches peut être inférieure à 10 ou 15 mm, éventuellement inférieure à 6 mm.

La figure 4 n'est qu'une illustration d'un cas avec au moins deux voies de dérivation agencées en série, de façon qu'un clapet de décharge soit ouvert en cas de colmatage du deuxième média filtrant, placé sur la première voie de dérivation. Plus généralement, on peut créer de tout façon adaptée une deuxième voie de dérivation qui est une voie de circulation du flux d'eau à la suite de la première voie de dérivation.

Dans une variante qui présente certaines similitudes avec le mode de réalisation de la figure 4, indépendamment du sens de filtration centripète ou centrifuge, il peut être prévu que la deuxième couche de filtration soit conformée en V, U ou forme similaire, de façon à présenter deux sections de filtration dont :
- une première section est utilisée à l'état fermé d'un clapet, et qui peut correspondre à la couche FL2 montrée sur la figure 4, traversé suivant un premier sens de filtration (sens centrifuge dans l'exemple non limitatif de la figure 4) ; et
- une deuxième section est utilisée sélectivement/uniquement en cas d'ouverture du clapet, qui fait circuler l'eau à purifier jusque dans une zone d'accès à la deuxième section, depuis laquelle le flux d'eau traverse la deuxième section dans un deuxième sens qui est opposé au premier sens.

Dans une telle configuration, le clapet 31 et le clapet 32 de la figure 4 peuvent être éventuellement conservés, tandis qu'un autre clapet additionnel permet au flux ayant traversé la première couche de filtration FL1 de parvenir contre la paroi externe du boîtier, avant de traverser une deuxième section (pliée vers l'extérieur par exemple par rapport à la section visible sur la figure 4) de la couche FL2, en circulant de façon centripète. Ce clapet additionnel (non représenté) peut aussi être en appui sur une portion de siège du flasque 5 et un élément de paroi peut compléter alors le flasque 5 pour former avec lui une chambre de circulation vers la zone périphérique d'accès à la deuxième section, cette chambre étant de préférence séparée de façon étanche de la zone d'amont Z1.

Plus généralement, un clapet de dérivation peut servir à amener le flux à purifier contre une deuxième section de la deuxième couche de filtration FL2 lorsque la première section de cette même couche est colmatée. Dans une option préférée, l'espace en sortie de cette couche est intercalé entre les deux sections et permet au flux purifié de s'écouler en direction de la sortie 12. Cette option est avantageuse lorsqu'il s'avère que la première couche de filtration FL1 n'est pas la cause du colmatage. Dans des exemples d'intégration dans une machine à laver 100, des particules de grande taille peuvent d'ailleurs être séparées par un dispositif de séparation (sorte de pré-filtre) monté en amont du filtre 1, par exemple pour séparer les pièces de monnaie et les particules de taille caractéristique supérieure ou égale à 4 ou 5 mm. Ce genre de pré-filtre peut être disposé au plus près de l'entrée du puisard 104 ; il est le plus souvent appelé filtre à peluches/charpie.

### Exemple(s) d'indicateur de colmatage

Un indicateur de colmatage 40 peut être prévu, éventuellement en étant fixé au boîtier de filtre ou en étant intégré à ce boitier. En référence aux figures 1 et 6, le filtre 1 peut présenter un composant E d'extension, de préférence de forme tubulaire, agencé entre l'entrée 11 et la chambre de filtration CH pour permettre une fonction d'indication de colmatage. Ce composant E est ici agencé pour constituer tout ou partie d'un indicateur de colmatage 40. Ce composant E inclut un organe annulaire 41 permettant de détecter si la quantité d'eau entrant dans le boîtier du filtre 1 correspond à un mode normal (du genre non colmaté avec blocage du passage du flux F1).

Par exemple, l'organe annulaire inclut au moins une pâle ou une patte/lame 44 formée à l'intérieur d'un anneau/bague constituant l'organe annulaire 41. Elle est conçue et agencée pour être entraînée en rotation, à la façon d'une pâle d'hélice par exemple. La patte 44 est fixée de manière rotative à un arbre de support 45, ici monté fixe dans le composant E, en s'étendant longitudinalement. Par conséquent, lorsque le flux d'eau s'engage dans et travers la section transversale où se trouve la patte 44, celle-ci- est entraînée en rotation. L'anneau tourne alors autour de l'arbre de support 45. Dans une variante, l'arbre 45 est monté librement rotatif et c'est l'ensemble arbre et patte qui tourne.

L'anneau ou organe annulaire similaire 41 constitue ici un anneau d'affichage tournant autour de l'axe longitudinal de la partie d'amenée du filtre incluant le composant E d'extension. Le cas échéant, pour permettre une visualisation en direct pour un utilisateur, par exemple du côté frontal, le filtre 1 peut être placé dans un logement ou cavité d'une machine à laver 100 qui permet d'observer l'affichage. Pour faciliter la visualisation, une partie transparente 42, le cas échéant avec une lentille d'agrandissement, peut envelopper l'organe annulaire 41.

Lorsque l'élément filtrant EF du filtre 1 assure correctement la filtration, typiquement sans passer par une ouverture de dérivation O ou O', l'eau aspirée du côté de l'entrée 11 pousse la patte 44 pour faire tourner l'anneau d'affichage, et s'écoule dans la chambre de filtration CH du boîtier porte-filtre en passant par l'ouverture d'accès 46. On comprend que cette ouverture 46 constitue une sortie du composant E d'extension ; pouvant éventuellement déboucher directement dans la chambre de filtration CH. L'eau à filtrer passe ensuite à travers l'élément filtrant EF par les ouvertures de la structure de support S qui est sélectivement ajourée dans sa partie tubulaire recouverte par une couche de filtration, ici la première couche de filtration FL1.

Lors d'un fonctionnement normal (voir aussi situation a/ décrite précédemment), les impuretés présentes dans l'eau sont éliminées en restant dans la chambre de filtration CH (dans certaines options en allant dans un compartiment inférieur situé à l'aplomb de l'élément filtrant EF). Autrement dit, l'eau est filtrée. L'eau qui a traversé la ou les couches de filtration FL1, FL2, FL3 passe dans la zone d'aval Z2 et rejoint la sortie 12.

En référence à la figure 6, une lentille ou un simple ergot radialement saillant peut être fournie dans la partie périphérique 42, de façon à constituer un dispositif d'indication visuelle qui peut confirmer visuellement que de l'eau peut circuler dans la zone d'amont Z1 via l'ouverture d'accès 46.

Une ouverture peut être réalisée dans la partie d'enceinte recevant le filtre 1, dans le lave-linge ou machine 100 similaire, par exemple au niveau d'un couvercle amovible. Si l'ergot peut s'étendre en saillie de cette ouverture, vers l'extérieur du couvercle, alors la partie tournante est bien visible pour confirmer la rotation de la bague 41 formant un indicateur d'affichage depuis l'extérieur de la machine 100.

Plus généralement, on peut prévoir toute sorte d'indicateur de colmatage 40, par exemple mobile entre plusieurs positions dont l'une est représentative d'un état opérationnel correct du filtre 1, sans besoin de maintenance, et une autre position est représentative d'une activation d'au moins clapets 30, 30a, 30b, 31, 32. Dans le cas d'indicateur à partie d'affichage tournante, une portion en vert peut représenter le fonctionnement normal et une portion en rouge peut représenter un colmatage, qui fait comprendre que la fonction de filtration n'est plus réalisée, ou tout du moins réalisée dans un mode dégradé qui n'est pas durable (et typiquement pas compatible avec une qualité d'eau évacuée sans particules polluantes comme des microplastiques ou microfibres, si la machine 100 peut encore fonctionner à l'aide du ou des clapets de décharge). Un indicateur à aiguille peut aussi être utilisé, afin d'afficher si l'écoulement dans l'élément filtrant ne correspond plus au fonctionnement normal (ou ne correspond plus à la situation de type a/ précitée).

Indépendamment de la façon dont l'utilisateur de la machine à laver 100 est averti - ou dont il comprend- que l'élément filtrant EF du filtre 1 va être ou est déjà colmaté, il peut être prévu que le boîtier de filtre comprenne une cuve transparente (au moins en partie) pour un contrôle visuel direct. Par exemple, si une alarme est déclenchée (le cas échant sous forme de message reçu sur un téléphone, moyennant un module ou une application adéquate prévue pour le traitement d'un message ou signal d'avertissement), l'utilisateur peut ainsi vérifier que l'élément filtrant EF a besoin d'être changé. Le cas échéant, le ou les flasques 5, 6 peuvent aussi être translucides ou transparents.

### Options de prévision ou d'avertissement d'un colmatage

Dans certaines options, un compteur de jours est déclenché au moment de la première utilisation de l'élément filtrant EF ou première utilisation du filtre 1 muni de sa ou ses couches de filtration FL1, FL2, FL3. Un tel compteur peut être monté indépendamment du filtre 1, sur la machine à laver 100. Eventuellement, une alarme lumineuse peut être déclenchée par une unité d'avertissement fonctionnement couplée au compteur de jours. Une cuve transparente peut permettre de contrôler visuellement si l'alarme/avertissement a été donné à juste titre. Plus généralement, tout estimateur 50 de durée de vie de l'élément filtrant EF peut être utilisé, permettant de déclencher une alerte lorsqu'expire la durée de vie qui peut s'exprimer en jours d'utilisation, en nombre de démarrages de programmes ou encore en une date finale d'expiration fixée à l'avance en connaissant initialement une date de début de fonctionnement de l'élément filtrant EF.

Dans certaines options, l'élément filtrant EF peut être manipulable et nettoyable, par exemple par utilisation d'air sous pression, injecté dans le sens inverse de la filtration. La structure de support S peut se décomposer en au moins deux sous-parties emboîtées l'une dans l'autre, de façon amovible. En cas de nettoyage, cela peut faciliter des opérations de raclage et d'injection de pression. Dans des options préférées, tout ou partie de l'élément filtrant est changé afin de bénéficier d'au moins une couche neuve de filtration parfaitement efficace.

Dans des modes de réalisation, on prévoit un système d'avertissement utilisant une partie sensible au colmatage. Il a été déjà décrit précédemment un exemple de partie sensible à la chute ou l'arrêt du débit de liquide entrant dans le boîtier de filtre. Dans certaines options, une liaison peut être établie entre le ou les clapets 30, 30a, 30, 31, 32 de décharge, présents dans le filtre 1, et le système d'avertissement de colmatage. Il peut s'agit d'une liaison courte (qui ne traverse pas nécessairement l'élément de paroi/boîtier), permettant d'allumer :
- une diode ou autre moyen d'affichage (lumineux ou non) pouvant être consulté par l'utilisateur,
- et /ou un composant produisant un signal sonore.

Alternativement, un téléphone portable qui dispose d'une application peut former le système d'avertissement qui réagit à la réception d'un signal ou d'une information représentative du colmatage au sein du filtre 1. Ainsi, le système d'avertissement peut aussi se situer ailleurs que dans l'interface 105 (interface homme-machine) de la machine à laver ; le filtre 1 peut équiper un appareil lave-linge existant.

Dans le cas de la situation b/ décrite précédemment ou situation similaire correspondant à un début de colmatage et/ou un colmatage d'une couche de filtration complète causant un déplacement de clapet vers sa position d'ouverture, une liaison adaptée peut permettre de réaliser l'alerte via le système d'avertissement. Optionnellement, une telle liaison utilise un interrupteur ou capteur sensible à la position d'un clapet 30, 30a, 30b, 31, 32.

Dans des formes de réalisation, le ou les clapets 30, 30a, 30b, 31, 32 sont configurés pour laisser passer, dans leur état ouvert, un débit d'eau qui n'est pas le même (par exemple inférieur avec un différentiel d'au moins 30% ou 40% à la baisse) que le débit habituel en l'absence de colmatage. Cette baisse de débit peut être paramétrée par la section de passage libérée par le ou les clapets en cas de colmatage de la surface de filtration. Ceci peut permettre une détection d'un état de colmatage par un moyen, par exemple un capteur sensible à un paramètre physique représentatif du colmatage de la partie perméable du filtre 1. Un capteur de débit peut par exemple constituer un tel moyen sensible, avec l'avantage de pouvoir le localiser ailleurs que dans la chambre de filtration CH, donc indépendamment de la localisation du ou des clapets. Un tel moyen sensible peut présenter une liaison avec un système d'avertissement ou inclure un indicateur de colmatage dont la position dépend d'une partie mobile immergée dans le flux de liquide.

Le moyen sensible au colmatage n'est pas particulièrement limité. Dans des formes de réalisation, un aimant et un détecteur magnétique sont associés pour former un mécanisme de détection permettant de détecter, éventuellement par utilisation d'une bague 41 du genre montré sur la figure 6 pour embarquer l'aimant, qu'une pression d'eau supérieure à un niveau prédéterminé a été générée en amont du filtre 1 ou dans la zone d'amont Z1 délimitée par le boîtier de filtre. A titre d'exemple non limitatif, il suffit de positionner le détecteur magnétique sur la surface extérieure d'une partie du boîtier qui fait face à la bague 41. Lorsque la bague 41 tourne et que l'aimant s'approche à une distance prédéterminée, le détecteur magnétique 62 le détecte et émet un signal de mise en marche. Ce signal de marche est donné à un dispositif de commande (non illustré) du lave-linge 100. La bague, l'aimant et le détecteur magnétique constituent alors un interrupteur qui détecte le flux d'eau dans le filtre 1 et forme un commutateur pour les différentes vitesses de rotation de la bague 41. Un tel commutateur peut être utilisé pour détecter l'apparition d'un changement de pression de l'eau (par exemple, une pression d'eau prédéterminée supérieure à un seuil de pression de l'eau représentant une perte de charge anormale au niveau de l'élément filtrant EF).

La présente divulgation ne se limite pas aux modes de réalisation décrits ci-avant, seulement à titre d'exemple, mais elle englobe toutes les variantes que pourra envisager l'homme de l'art dans le cadre de la protection recherchée.

## Revendications

1. Filtre (1) de machine à laver, en particulier de machine à laver le linge (2), destiné à être installé dans une sortie d'un circuit (3) de circulation d'eau liquide afin de purifier les eaux usées sortant de la machine (2) et/ou à réintroduire dans ledit circuit (3), le filtre (1) comprenant :
- un élément filtrant (EF) pour filtrer un flux d'eau (F1) chargé en particules solides en suspension dont des particules de taille inférieure à 1 mm, l'élément filtrant permettant de séparer au moins une première fraction de particules solides du côté d'une zone (Z1) d'amont de la filtration délimitée par l'élément filtrant et située dans une chambre de filtration (CH) ;
- un élément de paroi (W), permettant de délimiter tout ou partie de la chambre de filtration (CH), présentant une sortie (12) d'évacuation d'eau filtrée (F2) communiquant avec une zone (Z2) d'aval de la filtration située dans la chambre de filtration (CH), la zone d'aval (Z2) étant séparée de la zone d'amont (Z1) par une partie de l'élément filtrant perméable à l'eau qui présente au moins un média filtrant (FL1, FL2, FL3) et par une structure de support (S) pour supporter tout ou partie dudit média filtrant (FL1, FL2, FL3) ;
**caractérisé en ce que** le filtre (1) présente en outre :
- au moins un clapet (30a, 30b ; 30 ; 31, 32), mobile entre une position par défaut et une position décalée, chaque clapet dans sa position par défaut obturant l'accès à au moins une ouverture dite de dérivation (O, O') qui constitue une voie de communication entre la zone d'amont (Z1) et la zone d'aval (Z2) au travers de la structure de support (S) ;
et dans lequel chaque clapet parmi l'au moins un clapet (30a, 30b ; 30 ; 31, 32) est configuré pour occuper sa position décalée pour permettre une circulation d'eau vers la zone d'aval (Z2) via l'ouverture de dérivation lorsqu'un état de colmatage de la partie perméable à l'eau engendre une surpression dans la zone d'amont (Z1).

2. Filtre selon la revendication 1, dans lequel l'élément filtrant (EF) est sous la forme d'un insert incluant la structure de support (S) et monté de manière amovible dans la chambre de filtration (CH), l'au moins un clapet (30a, 30b ; 30 ; 31, 32) faisant partie de l'élément filtrant (EF).

3. Filtre selon la revendication 1 ou 2, dans lequel l'élément filtrant (EF) s'étend de façon annulaire entre un premier flasque (5) et un deuxième flasque (6), l'un au moins parmi le premier flasque et le deuxième flasque formant un siège pour un clapet (30 ; 30a, 30b ; 31, 32) à partie mobile (33) permettant, dans un état décalé pour libérer une ouverture de dérivation (O, O'), de contourner une couche de filtration de l'au moins un média filtrant (FL1, FL2) se trouvant dans un état colmaté.

4. Filtre selon la revendication 1 ou 2, dans lequel l'élément filtrant (EF) s'étend de façon annulaire entre un premier flasque (5) et un deuxième flasque (6), et dans lequel un tube (T) qui s'étend entre le premier flasque (5) et le deuxième flasque (6) forme un siège pour un clapet à partie mobile permettant de contourner une couche de filtration de l'au moins un média filtrant (FL1, FL2) se trouvant dans un état colmaté.

5. Filtre selon l'une quelconque des revendications 1 à 4, comprenant deux clapets (31, 32) dont l'un est associé à une première couche formant un média filtrant (FL1) pour laquelle il permet une dérivation en cas de colmatage et l'autre est associé à une deuxième couche de filtration formant un média filtrant (FL2) pour laquelle il permet une dérivation en cas de colmatage, la deuxième couche de filtration consistant en une toile ou membrane de séparation de particules de taille inférieure à 1 mm ou microfibres, non séparées par la première couche de filtration.

6. Filtre selon l'une quelconque des revendications 1 à 5, comprenant un boîtier qui présente :
- une entrée (11) pour l'amenée du flux d'eau (F1) à épurer, communiquant avec la zone en amont (Z1) ;
- ladite sortie (12) ;
- un premier élément de boîtier (21) incluant l'entrée (11) ; et
- un deuxième élément de boîtier (22) se fixant de façon amovible sur le premier élément de boîtier (21) ;
dans lequel tout ou partie de l'au moins un média filtrant (FL1, FL2, FL3) présente une forme annulaire, de façon à présenter une face interne qui délimite un espace intérieur creux de la zone en amont (Z1).

7. Filtre selon l'une quelconque des revendications 1 à 5, comprenant un boîtier qui présente :
- une entrée (11) pour l'amenée du flux d'eau (F1) à épurer, communiquant avec la zone en amont (Z1) ;
- ladite sortie (12) ;
- un premier élément de boîtier (21) incluant l'entrée (11) ; et
- un deuxième élément de boîtier (22) se fixant de façon amovible sur le premier élément de boîtier (21) ;
dans lequel tout ou partie de l'au moins un média filtrant (FL1, FL2, FL3) présente une forme annulaire, de façon à présenter une face interne qui délimite un espace intérieur creux de la zone en aval (Z2).

8. Filtre selon la revendication 1 ou 2, dans lequel l'élément filtrant (EF) présente un flasque (5) de forme annulaire et une couche en matériau de filtration attachée à la structure de support (S), ladite couche en matériau de filtration faisant partie de l'au moins un média filtrant, l'au moins un clapet incluant un clapet de dérivation (30 ; 30a, 30b ; 31) dont une partie mobile (8) obture une ou plusieurs ouvertures (O) qui sont formées dans le flasque (5), dans un tube intérieur (T) fixé sur le flasque (5), ou dans une extension (5') du flasque (5) située à l'opposé de ladite couche en matériau de filtration, la ou les ouvertures (O) communiquant avec un espace en aval de la couche en matériau de filtration, cet espace en aval s'étendant à l'intérieur de la chambre de filtration (CH).

9. Filtre selon l'une quelconque des revendications précédentes, dans lequel deux couches de filtration successives formant deux médias filtrants distincts (FL1, FL2) de l'élément filtrant (EF) sont séparées entre elles par un espace intercalaire (9) qui est de préférence annulaire, l'élément filtrant (EF) incluant une ouverture de dérivation (O') permettant de faire communiquer l'espace intercalaire (9) avec la zone en aval (Z2) de l'élément filtrant qui communique avec la sortie (12).

10. Filtre selon la revendication 1 ou 2, comprenant :
- une première voie de dérivation (O, 9) accessible à l'aide d'un premier clapet (31), permettant de contourner un premier média filtrant incluant une première couche de filtration (FL1) de l'élément filtrant, qui présente une première taille de pores ; et
- un deuxième média filtrant incluant une deuxième couche de filtration (FL2) , ayant une deuxième taille de pores qui est de préférence supérieure à la première taille de pores, le deuxième média filtrant étant positionné sur la première voie de dérivation (O, 9) ;
l'au moins un clapet (30a, 30b ; 30 ; 31, 32) comprenant ledit premier clapet (31).

11. Filtre selon l'une quelconque des revendications 1 à 10, dans lequel le ou les clapets qui font partie de l'au moins un clapet (30a, 30b ; 30 ; 31, 32) sont configurés pour déclencher, dans la position décalée de libération de l'ouverture de dérivation (O, O') associée, un système d'avertissement, afin d'alerter du colmatage affectant la partie perméable à l'eau de l'élément filtrant (EF).

12. Filtre selon l'une quelconque des revendications 1 à 10, comprenant un dispositif sensible à un paramètre physique représentatif du colmatage de la partie perméable à l'eau, ledit dispositif comprenant :
- un capteur en liaison avec un système d'avertissement, afin d'alerter du colmatage affectant la partie perméable à l'eau de l'élément filtrant (EF),
- et/ou une partie visible d'affichage (41), mobile pour visuellement représenter le colmatage.

13. Machine à laver le linge, comprenant :
- une cuve de lavage (102) ;
- un circuit (C1) de vidange pour l'évacuation d'eau sortant de la cuve de lavage (102) ;
- une terminal de communication disposant d'une sortie d'affichage et/ou d'une sortie sonore ;
**caractérisée en ce qu'**elle comporte le filtre (1) selon l'une quelconque des revendications précédentes, placé dans le circuit (C1) de vidange, de préférence en aval d'un préfiltre, le terminal de communication étant configuré pour afficher un message et/ou produire un signal sonore et/ou lumineux, afin d'avertir d'un besoin de maintenance du filtre (1), en fonction d'un paramètre représentatif de l'un au moins parmi une durée d'utilisation de l'élément filtrant (EF) et une ouverture d'un clapet (30a, 30b ; 30 ; 31, 32) de l'élément filtrant (EF).

14. Utilisation du filtre (1) tel que défini dans l'une quelconque des revendications 1 à 12, dans un circuit (C1) de vidange d'un lave-linge (100), le filtre (1) comprenant un dispositif sensible à un paramètre physique représentatif du colmatage de la partie perméable à l'eau de l'élément filtrant (EF) et/ou d'un déplacement d'un clapet (30a, 30b ; 30 ; 31, 32) pour libérer une ouverture de dérivation, un signal d'avertissement étant transmis à une interface de communication, en fonction d'un état de détection dudit dispositif, l'interface de communication étant prévue de préférence dans un terminal (105) de communication du lave-linge (100).

15. Utilisation du filtre (1) tel que défini dans l'une quelconque des revendications 1 à 12, dans un circuit (C1) de vidange d'un lave-linge, le filtre (1) comprenant un indicateur de colmatage permettant de visualiser un état de colmatage de la partie perméable à l'eau de l'élément filtrant (EF).

## Patentansprüche

1. Filter (1) einer Waschmaschine, insbesondere einer Waschmaschine für Wäsche (2), der dazu bestimmt ist, in einem Auslass eines Kreislaufs (3) für die Zirkulation von flüssigem Wasser installiert zu werden, um das aus der Maschine (2) austretende und/oder in den Kreislauf (3) zurückzuführende Abwasser zu reinigen, wobei der Filter (1) umfasst:
- ein Filterelement (EF) zum Filtern eines Wasserstroms (F1), der mit suspendierten Feststoffpartikeln beladen ist, darunter Partikel mit einer Größe von weniger als 1 mm, wobei das Filterelement es ermöglicht, mindestens eine erste Fraktion von Feststoffpartikeln auf der Seite einer stromaufwärts gelegenen Zone (Z1) der Filtration abzutrennen, die durch das Filterelement begrenzt ist und sich in einer Filterkammer (CH) befindet;
- ein Wandelement (W), das es ermöglicht, die gesamte oder einen Teil der Filterkammer (CH) zu begrenzen, und das einen Auslass (12) zum Abführen von gefiltertem Wasser (F2) aufweist, der mit einer stromabwärts gelegenen Zone (Z2) der Filtration in Verbindung steht, die sich in der Filterkammer (CH) befindet, wobei die stromabwärts gelegene Zone (Z2) von der stromaufwärts gelegenen Zone (Z1) durch einen Teil des wasserdurchlässigen Filterelements, der mindestens ein Filtermedium (FL1, FL2, FL3) aufweist, und durch eine Stützstruktur (S) zum Stützen des gesamten oder eines Teils des Filtermediums (FL1, FL2, FL3) getrennt ist;
**dadurch gekennzeichnet, dass** der Filter (1) außerdem aufweist:
- mindestens eine Klappe (30a, 30b; 30; 31, 32), die zwischen einer Standardposition und einer versetzten Position beweglich ist, wobei jede Klappe in ihrer Standardposition den Zugang zu mindestens einer sogenannten Umgehungsöffnung (O, O') verschließt, die einen Verbindungsweg zwischen der stromaufwärts gelegenen Zone (Z1) und der stromabwärts gelegenen Zone (Z2) durch die Stützstruktur (S) hindurch bildet;
und wobei jede der mindestens einen Klappe (30a, 30b; 30; 31, 32) so konfiguriert ist, dass sie ihre versetzte Position einnimmt, um eine Wasserzirkulation zur stromabwärts gelegenen Zone (Z2) über die Umgehungsöffnung zu ermöglichen, wenn ein Verstopfungszustand des wasserdurchlässigen Teils einen Überdruck in der stromaufwärts gelegenen Zone (Z1) erzeugt.

2. Filter nach Anspruch 1, wobei das Filterelement (EF) in Form eines Einsatzes vorliegt, der die Stützstruktur (S) einschließt und lösbar in der Filterkammer (CH) montiert ist, wobei die mindestens eine Klappe (30a, 30b; 30; 31, 32) Teil des Filterelements (EF) ist.

3. Filter nach Anspruch 1 oder 2, wobei sich das Filterelement (EF) ringförmig zwischen einem ersten Flansch (5) und einem zweiten Flansch (6) erstreckt, wobei mindestens einer von dem ersten Flansch und dem zweiten Flansch einen Sitz für eine Klappe (30; 30a, 30b; 31, 32) mit beweglichem Teil (33) bildet, der es in einem versetzten Zustand zur Freigabe einer Umgehungsöffnung (O, O') ermöglicht, eine Filterschicht des mindestens einen Filtermediums (FL1, FL2), das sich in einem verstopften Zustand befindet, zu umgehen.

4. Filter nach Anspruch 1 oder 2, wobei sich das Filterelement (EF) ringförmig zwischen einem ersten Flansch (5) und einem zweiten Flansch (6) erstreckt, und wobei ein Rohr (T), das sich zwischen dem ersten Flansch (5) und dem zweiten Flansch (6) erstreckt, einen Sitz für eine Klappe mit beweglichem Teil bildet, mit dem eine Filterschicht des mindestens einen Filtermediums (FL1, FL2) umgangen werden kann, die sich in einem verstopften Zustand befindet.

5. Filter nach einem der Ansprüche 1 bis 4, umfassend zwei Klappen (31, 32), von denen eine mit einer ersten Schicht verbunden ist, die ein Filtermedium (FL1) bildet, für das sie eine Umgehung im Falle einer Verstopfung ermöglicht, und die andere mit einer zweiten Filterschicht verbunden ist, die ein Filtermedium (FL2) bildet, für das sie eine Umgehung im Falle einer Verstopfung ermöglicht, wobei die zweite Filterschicht aus einem Gewebe oder einer Membran zur Abtrennung von Partikeln mit einer Größe von weniger als 1 mm oder Mikrofasern besteht, die durch die erste Filterschicht nicht abgetrennt wurden.

6. Filter nach einem der Ansprüche 1 bis 5, umfassend ein Gehäuse, das aufweist:
- einen Einlass (11) für die Zufuhr des zu reinigenden Wasserstroms (F1), der mit der stromaufwärts gelegenen Zone (Z1) in Verbindung steht;
- den genannten Auslass (12);
- ein erstes Gehäuseelement (21), das den Einlass (11) einschließt; und
- ein zweites Gehäuseelement (22), das abnehmbar an dem ersten Gehäuseelement (21) befestigt ist;
wobei das gesamte oder ein Teil des mindestens einen Filtermediums (FL1, FL2, FL3) eine ringförmige Form aufweist, so dass es eine Innenfläche aufweist, die einen hohlen Innenraum der stromaufwärts gelegenen Zone (Z1) begrenzt.

7. Filter nach einem der Ansprüche 1 bis 5, umfassend ein Gehäuse, das aufweist:
- einen Einlass (11) für die Zufuhr des zu reinigenden Wasserstroms (F1), der mit der stromaufwärts gelegenen Zone (Z1) in Verbindung steht;
- den genannten Auslass (12);
- ein erstes Gehäuseelement (21), das den Einlass (11) einschließt; und
- ein zweites Gehäuseelement (22), das abnehmbar an dem ersten Gehäuseelement (21) befestigt ist;
wobei das gesamte oder ein Teil des mindestens einen Filtermediums (FL1, FL2, FL3) eine ringförmige Form aufweist, so dass es eine Innenfläche aufweist, die einen hohlen Innenraum der stromabwärts gelegenen Zone (Z2) begrenzt.

8. Filter nach Anspruch 1 oder 2, wobei das Filterelement (EF) einen ringförmigen Flansch (5) und eine Schicht aus Filtermaterial aufweist, die an der Stützstruktur (S) befestigt ist, wobei die Schicht aus Filtermaterial Teil des mindestens einen Filtermediums ist, wobei die mindestens eine Klappe eine Umgehungsklappe (30; 30a, 30b; 31) einschließt, deren beweglicher Teil (8) eine oder mehrere Öffnungen (O) verschließt, die in dem Flansch (5), in einem an dem Flansch (5) befestigten Innenrohr (T) oder in einer Verlängerung (5') des Flansches (5), die sich gegenüber der Schicht aus Filtermaterial befindet, ausgebildet sind, wobei die eine oder die mehreren Öffnungen (O) mit einem stromabwärts gelegenen Raum der Schicht aus Filtermaterial in Verbindung stehen, wobei sich dieser stromabwärts gelegene Raum in das Innere der Filterkammer (CH) erstreckt.

9. Filter nach einem der vorhergehenden Ansprüche, wobei zwei aufeinanderfolgende Filterschichten, die zwei verschiedene Filtermedien (FL1, FL2) des Filterelements (EF) bilden, durch einen Zwischenraum (9) voneinander getrennt sind, der vorzugsweise ringförmig ist, wobei das Filterelement (EF) eine Umgehungsöffnung (O') einschließt, die es ermöglicht, den Zwischenraum (9) mit der stromabwärts gelegenen Zone (Z2) des Filterelements zu verbinden, die mit dem Auslass (12) in Verbindung steht.

10. Filter nach Anspruch 1 oder 2, umfassend:
- einen ersten Umgehungsweg (O, 9), der mit Hilfe einer ersten Klappe (31) zugänglich ist und es ermöglicht, ein erstes Filtermedium zu umgehen, das eine erste Filterschicht (FL1) des Filterelements einschließt, die eine erste Porengröße aufweist; und
- ein zweites Filtermedium einschließlich einer zweiten Filterschicht (FL2) mit einer zweiten Porengröße, die vorzugsweise größer als die erste Porengröße ist, wobei das zweite Filtermedium auf dem ersten Umgehungsweg (O, 9) positioniert ist;
wobei die mindestens eine Klappe (30a, 30b; 30; 31, 32) die genannte erste Klappe (31) umfasst.

11. Filter nach einem der Ansprüche 1 bis 10, wobei die Klappe(n), die Teil der mindestens einen Klappe (30a, 30b; 30; 31, 32) sind, so konfiguriert sind, dass sie in der versetzten Freigabeposition der zugehörigen Umgehungsöffnung (O, O') ein Warnsystem auslösen, um vor Verstopfungen zu warnen, die den wasserdurchlässigen Teil des Filterelements (EF) betreffen.

12. Filter nach einem der Ansprüche 1 bis 10, umfassend eine Vorrichtung, die auf einen physikalischen Parameter anspricht, der für die Verstopfung des wasserdurchlässigen Teils repräsentativ ist, wobei die Vorrichtung umfasst:
- einen Sensor in Verbindung mit einem Warnsystem, um vor der Verstopfung zu warnen, die den wasserdurchlässigen Teil des Filterelements (EF) beeinträchtigt,
- und/oder einen sichtbaren Anzeigeteil (41), der beweglich ist, um die Verstopfung visuell darzustellen.

13. Waschmaschine, umfassend:
- einem Waschbottich (102);
- einen Entleerungskreislauf (C1) zum Abführen von Wasser, das aus dem Waschbottich (102) austritt;
- ein Kommunikationsterminal, das über einen Anzeigeausgang und/oder einen Tonausgang verfügt;
**dadurch gekennzeichnet, dass** sie den Filter (1) nach einem der vorhergehenden Ansprüche umfasst, der in dem Entleerungskreislauf (C1), vorzugsweise stromabwärts eines Vorfilters, angeordnet ist, wobei das Kommunikationsterminal so konfiguriert ist, dass es eine Nachricht anzeigt und/oder ein akustisches und/oder Leuchtsignal erzeugt, um auf einen Wartungsbedarf des Filters (1) hinzuweisen, in Abhängigkeit von einem Parameter, der repräsentativ ist für mindestens eines von einer Nutzungsdauer des Filterelements (EF) und einer Öffnung einer Klappe (30a, 30b; 30; 31, 32) des Filterelements (EF).

14. Verwendung des Filters (1), wie in einem der Ansprüche 1 bis 12 definiert, in einem Entleerungskreislauf (C1) einer Waschmaschine (100), wobei der Filter (1) eine Vorrichtung umfasst, die auf einen physikalischen Parameter anspricht, der für die Verstopfung des wasserdurchlässigen Teils des Filterelements (EF) und/oder für eine Verschiebung einer Klappe (30a, 30b; 30; 31, 32) zur Freigabe einer Umgehungsöffnung, repräsentativ ist, wobei ein Warnsignal an eine Kommunikationsschnittstelle übertragen wird, in Abhängigkeit von einem Erfassungszustand der Vorrichtung, wobei die Kommunikationsschnittstelle vorzugsweise in einem Kommunikationsterminal (105) der Waschmaschine (100) vorgesehen ist.

15. Verwendung des Filters (1), wie in einem der Ansprüche 1 bis 12 definiert, in einem Entleerungskreislauf (C1) einer Waschmaschine, wobei der Filter (1) einen Verstopfungsindikator umfasst, der es ermöglicht, einen Verstopfungszustand des wasserdurchlässigen Teils des Filterelements (EF) sichtbar zu machen.

## Claims

1. A filter (1) for a washing machine, in particular for a laundry washing machine (2), intended to be installed in an outlet of a liquid water circulation circuit (3) in order to purify the waste water coming out of the machine (2) and/or to be reintroduced into said circuit (3), the filter (1) comprising:
- a filtering element (EF) for filtering a flow of water (F1) loaded with solid particles in suspension including particles with a size smaller than 1 mm, the filtering element allowing separating at least one first fraction of solid particles on the side of an upstream area (Z1) of the filtration delimited by the filtering element and located in a filtration chamber (CH);
- a wall element (W), allowing delimiting all or part of the filtration chamber (CH), having an outlet (12) for discharging filtered water (F2) communicating with a downstream area (Z2) of the filtration located in the filtration chamber (CH), the downstream area (Z2) being separated from the upstream area (Z1) by a portion of the water-permeable filtering element which has at least one filtering medium (FL1, FL2, FL3) and by a support structure (S) to support all or part of said filtering medium (FL1, FL2, FL3);
**characterised in that** the filter (1) further has:
- at least one valve (30a, 30b; 30; 31, 32), movable between a default position and an offset position, each valve in its default position sealing access to at least one so-called bypass opening (O, O') which forms a communication line between the upstream area (Z1) and the downstream area (Z2) throughout the support structure (S);
and wherein each valve amongst the at least one valve (30a, 30b; 30; 31, 32) is configured to occupy its offset position to enable a water circulation towards the downstream area (Z2) via the bypass opening when a clogging state of the water-permeable portion generates an overpressure in the upstream area (Z1).

2. The filter according to claim 1, wherein the filtering element (EF) is in the form of an insert including the support structure (S) and removably mounted in the filtration chamber (CH), the at least one valve (30a, 30b; 30; 31, 32) forming part of the filtering element (EF).

3. The filter according to claim 1 or 2, wherein the filtering element (EF) extends in an annular fashion between a first flange (5) and a second flange (6), at least one amongst the first flange and the second flange forming a seat for a valve (30; 30a, 30b; 31, 32) with a movable portion (33) allowing, in an offset state to clear a bypass opening (O, O'), bypassing a filtration layer of the at least one filtering medium (FL1, FL2) in a clogged state.

4. The filter according to claim 1 or 2, wherein the filtering element (EF) extends in an annular fashion between a first flange (5) and a second flange (6), and wherein a tube (T) which extends between the first flange (5) and the second flange (6) forms a seat for a valve with a movable portion allowing bypassing a filtration layer of the at least one filtering medium (FL1, FL2) in a clogged state.

5. The filter according to any one of claims 1 to 4, comprising two valves (31, 32), one of which is associated with a first layer forming a filtering medium (FL1) for which it enables a bypass in case of clogging and the other one is associated with a second filtration layer forming a filtering medium (FL2) for which it enables a bypass in case of clogging, the second filtration layer consisting of a cloth or diaphragm for separating particles with a size smaller than 1 mm or microfibers, not separated by the first filtration layer.

6. The filter according to any one of claims 1 to 5, comprising a case which has:
- an inlet (11) for supplying the flow of water (F1) to be purified, communicating with the upstream area (Z1);
- said output (12);
- a first case element (21) including the inlet (11); and
- a second case element (22) removably fastened on the first case element (21);
wherein all or part of the at least one filtering medium (FL1, FL2, FL3) has an annular shape, so as to have an inner face which delimits a hollow internal space of the upstream area (Z1).

7. The filter according to any one of claims 1 to 5, comprising a case which has:
- an inlet (11) for supplying the flow of water (F1) to be purified, communicating with the upstream area (Z1);
- said output (12);
- a first case element (21) including the inlet (11); And
- a second case element (22) removably fastened on the first case element (21);
wherein all or part of the at least one filtering medium (FL1, FL2, FL3) has an annular shape, so as to have an inner face which delimits a hollow internal space of the downstream area (Z2).

8. The filter according to claim 1 or 2, wherein the filtering element (EF) has an annular-shaped flange (5) and a filtration material layer attached to the support structure (S), said filtration material layer forming part of the at least one filtering medium, the at least one valve including a bypass valve (30; 30a, 30b; 31) a movable portion (8) of which seals one or more opening(s) (O) which are formed in the flange (5), in an inner tube (T) fastened to the flange (5), or in an extension (5') of the flange (5) located opposite to said filtration material layer, the opening(s) (O) communicating with a space downstream of the filtration material layer, this downstream space extending inside the filtration chamber (CH).

9. The filter according to any one of the preceding claims, wherein two successive filtration layers forming two distinct filtering media (FL1, FL2) of the filtering element (EF) are separated from each other by an intermediate space (9) which is preferably annular, the filtering element (EF) including a bypass opening (O') allowing communicating the intermediate space (9) with the downstream area (Z2) of the filtering element which communicates with the outlet (12).

10. The filter according to claim 1 or 2, comprising:
- a first bypass line (O, 9) accessible using a first valve (31), allowing bypassing a first filtering medium including a first filtration layer (FL1) of the filtering element, which has a first pore size; and
- a second filtering medium including a second filtration layer (FL2), having a second pore size which is preferably larger than the first pore size, the second filtering medium being positioned on the first bypass line (O, 9);
the at least one valve (30a, 30b; 30; 31, 32) comprising said first valve (31).

11. The filter according to any one of claims 1 to 10, wherein the valve(s) which form(s) part of the at least one valve (30a, 30b; 30; 31, 32) is/are configured to trigger, in the offset clear position of the associated bypass opening (O, O'), a warning system, in order to warn of clogging affecting the water-permeable portion of the filtering element (EF).

12. The filter according to any one of claims 1 to 10, comprising a device sensitive to a physical parameter representative of the clogging of the water-permeable portion, said device comprising:
- a sensor connected to a warning system, in order to warn of clogging affecting the water-permeable portion of the filtering element (EF),
- and/or a visible display portion (41), movable to visually represent the clogging.

13. A washing machine, comprising:
- a washing tank (102);
- a drain circuit (C1) for the discharge of water coming out of the washing tank (102);
- a communication terminal provided with a display output and/or a sound output; **characterised in that** it includes the filter (1) according to any one of the preceding claims, placed in the drain circuit (C1), preferably downstream of a pre-filter, the communication terminal being configured to display a message and/or produce an audible and/or light signal, in order to warn of a need for maintenance of the filter (1), according to a parameter representative of at least one amongst a duration of use of the filtering element (EF) and an opening of a valve (30a, 30b; 30; 31, 32) of the filtering element (EF).

14. A use of the filter (1) as defined in any one of claims 1 to 12, in a drain circuit (C1) of a washing machine (100), the filter (1) comprising a device sensitive to a physical parameter representative of the clogging of the water-permeable portion of the filtering element (EF) and/or of a movement of a valve (30a, 30b; 30; 31, 32) to clear a bypass opening, a warning signal being transmitted to a communication interface, according to a detection state of said device, the communication interface being preferably provided in a communication terminal (105) of the washing machine (100).

15. A use of the filter (1) as defined in any one of claims 1 to 12, in an emptying circuit (C1) of a washing machine, the filter (1) comprising a clogging indicator allowing visualising a clogging state of the water-permeable portion of the filtering element (EF).
